# EUROPEAN PATENT APPLICATION

(11) **EP 4 311 835 A1**
(43) Date of publication of application: **31.01.2024**
(21) Application number: 23178829.0
(22) Date of filing: 13.06.2023
(51) Int. Cl.: C08B 37/00, C08L 5/00

(54) **POLLEN POLYSACCHARIDE AND THE SEPARATION METHOD AND APPLICATION**

(30) Priority: 29.07.2022 CN 202210908942; 29.07.2022 CN 202210905988; 29.07.2022 CN 202210906000; 29.07.2022 CN 202210905990
(71) Applicant: Chengdu Newsun Crop Science Co., Ltd., Chengdu Sichuan 611630 (CN)
(72) Inventor: He, Qiming, Chengdu, Sichuan, 611630 (CN); Huang, Jin, Chengdu, Sichuan, 611630 (CN); Li, Yuzhu, Chengdu, Sichuan, 611630 (CN); Wang, Huihui, Chengdu, Sichuan, 611630 (CN); Liu, Ke, Chengdu, Sichuan, 611630 (CN); Du, Chuting, Chengdu, Sichuan, 611630 (CN); Wu, Dan, Chengdu, Sichuan, 611630 (CN); Ma, Baopeng, Chengdu, Sichuan, 611630 (CN); Ren, Dan, Chengdu, Sichuan, 611630 (CN); Xie, Xingwei, Chengdu, Sichuan, 611630 (CN); Song, Shiyun, Chengdu, Sichuan, 611630 (CN); Wu, Shuaiqiang, Chengdu, Sichuan, 611630 (CN); Wang, Yuping, Chengdu, Sichuan, 611630 (CN); Chen, Guangjing, Chengdu, Sichuan, 611630 (CN)
(74) Representative: Ipey

(57) **Abstract**

This invention belongs to the technical field of plant extract separation, and specifically relates to a pollen polysaccharide 1-4 and its separation method and application. This invention extracts, separates and purifies the polysaccharide from oilseed rape pollen to obtain pollen polysaccharide 1-4, which have been tested to be effective in the direction of plant growth-promoting and stress resistance. At the same time, the invention also finds that the pollen polysaccharide active moiety Fr, the pollen polysaccharide active moiety Fr-1 and the pollen polysaccharide active moiety Fr-1-5 of the crude isolated component of rape pollen also have plant growth-promoting and stress-resistant effects.

## Description

### Technical Field

The invention belongs to the technical field of plant extract separation, in particular to pollen polysaccharide 1, 2, 3 or 4, and its separation method and application.

### Background

The inventor's previous research (Patent CN 113133454B and Patent CN 113133455B) shows that the aqueous extract of oilseed rape pollen can be used for plant stress resistance and growth-promotion, including vegetables or fruit trees, such as Baby Chinese cabbage, asparagus lettuce, romaine lettuce, Brassica chinensis L., wheat, pepper, tomato, citrus, kiwi fruit, cherry, pear, apple, etc. At the same time, the components in it are also detected, which contain carbohydrates, proteins, amino acids and lipids. However, the specific active ingredients have not been studied.

In addition, the literature "Research Progress on Relationship Between Amino Acids and Plant Stress Resistance" (Fangfang Xing, Mingfu Gao, Chuanzhi Zhou, Chunying Xu, Lingchao Fan. [J]. Heilongjiang Agricultural Sciences, 2018 (03): 150-155) reported that amino acids can also be used for plant stress resistance.

On the basis that there may be many substances in the aqueous extract of oilseed rape pollen that can promote plant growth or stress resistance, at present, technicians in the field can't know which substances play a leading role in promoting plant growth or stress resistance, so it is necessary to further study the extract of oilseed rape pollen.

### Contents of the Invention

Polysaccharide is a kind of carbohydrates with complex structure, which is formed by dehydration and condensation of several monosaccharide molecules. The structural units are connected by glycosidic bonds. The common glycosidic bonds are α-1, 3 glycosidic bonds, β-1, 6 glycosidic bonds, β-1, 4 glycosidic bonds, α-1, 4 glycosidic bonds and β-1, 3 glycosidic bonds. Polysaccharides widely exist in animals, plants and microorganisms, and polysaccharides from different sources have different biological activities. Existing studies have shown that plant polysaccharides have biological activities such as immune regulation, anti-tumor, anti-oxidation, anti-aging, hypoglycaemic and hypolipidaemic, and have the characteristics of widely available, degradable, high safety, easy to modify and high environmental affinity, so they are widely used in food, medicine, animal husbandry and aquaculture industries.

At the same time, plant polysaccharides are a class of natural macromolecular polymers with a complex structure. There is little research on the specific molecular structure of pollen polysaccharides and their conformational relationships with their physiological activities, so it is necessary to isolate and identify pollen polysaccharides to provide a reliable theoretical and experimental basis for the future development of pollen polysaccharide resources.

The invention extracts, separates and purifies the polysaccharide in the rape pollen to obtain a new pollen polysaccharide. After testing, the pollen polysaccharide has certain effects in the direction of plant growth promotion and stress resistance.

In particular, the invention provides pollen polysaccharide 1, the main repeating structural units of which are as follows: 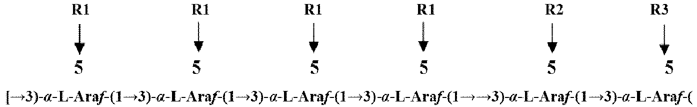 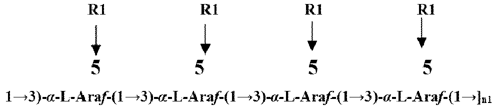 Where,
**R1 is T-α-L-Ara*f*-(1→5)-α-L-Ara*f*-(1→**
**R2 is T-β-D-Gal*p*-(1→6)-β-D-Gal*p*-(1→**
**R3 is T-α-D-Glc*p*-(1→4)-*α*-D-Glc*p*-(1→.**

In the polysaccharide backbone of the present invention, groups R1, R2 and R3 are connected to the 5 positions of arabinose.

In the invention, Ara represents arabinose; Gal represents galactose; Glc represents glucose; *f* represents the furanose configuration; ***p*** represents the pyranose configuration; T represents the terminal (terminal group) of polysaccharide molecule.

The molar content ratio of arabinose: galactose: glucose is equal to 0.671: 0.132: 0.120.

The pollen polysaccharide of the invention contains the following trace monosaccharide units besides the main repeated structural units: fucose, xylose and mannose.

In the invention, the average molecular weight of pollen polysaccharide 1 is 20 ~ 30KDa;

Furthermore, the average molecular weight of pollen polysaccharide 1 is 23 ~ 26KDa;

In the invention, the average molecular weight of pollen polysaccharide 1 is 24KDa ~ 25KDa, for example 24774.22 Da.

The infrared spectrum of the pollen polysaccharide 1 of the invention comprises at least one or more of the following absorption peaks: 3,342 cm⁻¹, 1,641 cm⁻¹, 1,536 cm⁻¹, 1,440 cm⁻¹, 1,147 cm⁻¹, 1,103 cm⁻¹, 1,076 cm⁻¹, 1,311cm⁻¹, 1,241 cm⁻¹, 1,027 cm⁻¹, 894 cm⁻¹, 873 cm⁻¹, 873 cm⁻¹.

Among them, 3,342 cm⁻¹ is the stretching vibration absorption peak of O-H, which is the characteristic peak of carbohydrates. The absorption peak at 1,641 cm⁻¹ belongs to crystal water; the absorption peak at 1,536 cm⁻¹ belongs to N-H variable angle vibration; the absorption peaks at 1,440 cm⁻¹, 1,147 cm⁻¹, 1,103 cm⁻¹ and 1,076 cm⁻¹ belong to C-O stretching vibration; the absorption peaks at 1,311 cm⁻¹, 1,241 cm⁻¹ and 1,027 cm⁻¹ belong to O-H variable angle vibration; the absorption peak at 894 cm⁻¹ is attributed to C-H angular vibration of β-end-group epimer of pyran ring; the absorption peak at 873 cm⁻¹ is attributed to the C-H angular vibration of the equatorial bond other than end-group epimer C-H of the pyranoid ring.

The invention provides a pollen polysaccharide 2, the main repeated structural units of which are as follows: 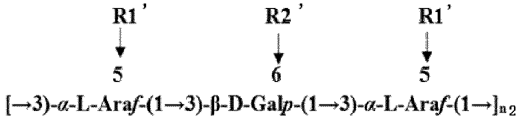
Where R1' is T-α-L-Ara*f-*(1→5)-*α*-L-Ara*f*(1→
R2' is T-β-D-Gal*p*-(1→6)-β-D-Gal*p*-(1→

In the polysaccharide backbone of the present invention, the group R1' is linked to position 5 of arabinose and R2' is linked to position 6 of galactose.

In the invention, Ara represents arabinose; Gal represents galactose; *f* represents furanose; *p* represents pyranose; T represents the terminal (terminal group) of polysaccharide molecule.

Among them, the molar content ratio of arabinose to galactose is equal to 0.597: 0.283.

The pollen polysaccharide of the invention contains the following trace monosaccharide units besides the main repeated structural units: fucose, glucose, xylose and mannose.

In the invention, the average molecular weight of pollen polysaccharide 2 is 5 ~ 15KDa;

Furthermore, the average molecular weight of pollen polysaccharide 2 is 9 ~ 11KDa;

In the present invention, the average molecular weight of pollen polysaccharide 2 is 10 ~ 11KDa, for example 10718.15 Da.

The infrared spectrum of the pollen polysaccharide 2 of the invention comprises at least one or more of the following absorption peaks: 3,288 cm⁻¹, 2,931 cm⁻¹, 2,871 cm⁻¹, 1,641 cm⁻¹, 1,548 cm⁻¹, 1,440 cm⁻¹, 1,402 cm⁻¹, 1,309 cm⁻¹, 1,243 cm⁻¹, 1,081 cm⁻¹, 896 cm⁻¹.

Among them, 3,288 cm⁻¹ is the stretching vibration absorption peak of O-H, which is the characteristic peak of carbohydrates. There is an absorption peak at 2,931 cm⁻¹ and 2,871 cm⁻¹, which can be attributed to C-H stretching vibration. There is an absorption peak at 1,641 cm⁻¹, which can be attributed to crystal water. There is an absorption peak at 1,548 cm⁻¹, which may be attributed to C = O stretching vibration. There is an absorption peak at 1,440 cm⁻¹ and 1,402 cm⁻¹, which can be attributed to C-O stretching vibration. There are absorption peaks at 1,309 cm⁻¹, 1,243 cm⁻¹ and 1,081 cm⁻¹, which can be attributed to O-H variable angle vibration. There is an absorption peak at 896 cm⁻¹, which can be attributed to the C-H angular vibration of β-end-group epimer of pyranoid ring.

The invention provides a pollen polysaccharide 3, the main repeated structural units of which are as follows:

| | |
|---|---|
| Main Chain | 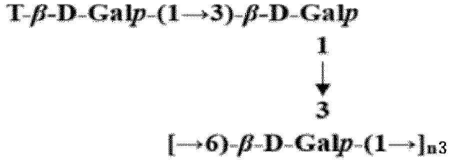 |
| Branch Chain | 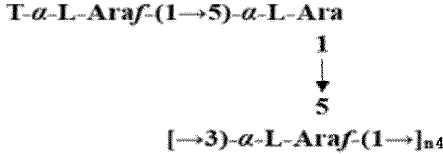 |

Among them, Ara represents arabinose; Gal represents galactose;*f* represents the furanose configuration; ***p*** represents the pyranose configuration; T represents the terminal (terminal group) of polysaccharide molecule.

Among them, the molar content ratio of arabinose to galactose is equal to 0.328: 0.399.

The pollen polysaccharide of the invention contains the following trace monosaccharides besides the main repeated structural units: fucose, rhamnose, glucose, xylose, mannose, galacturonic acid and glucuronic acid.

In the invention, the average molecular weight of pollen polysaccharide 3 is 60 ~ 70KDa;

Furthermore, the average molecular weight of pollen polysaccharide 3 is 65 ~ 70KDa;

In the present invention, the average molecular weight of pollen polysaccharide 3 is 66 ~ 68KDa, for example 66911.38 Da.

The infrared spectrum of the pollen polysaccharide 3 of the present invention comprises at least one or more than one of the following absorption peaks: 3,426 cm⁻¹, 2,939 cm⁻¹, 1,734 cm⁻¹, 1,619 cm⁻¹, 1,423 cm⁻¹, 1,145 cm⁻¹, 1,091 cm⁻¹, 895 cm⁻¹.

The absorption band of pollen polysaccharide 3 is the stretching vibration absorption peak of-OH at 3,600-3,200 cm⁻¹, and the absorption peak in this region is the characteristic peak of carbohydrates. As follows: 3,426 cm⁻¹ is the stretching vibration absorption peak of O-H, which is the characteristic peak of sugar. There is an absorption peak at 2,939 cm⁻¹, which can be attributed to C-H stretching vibration. The weak absorption peak near 1,734 cm⁻¹ is attributed to the stretching vibration of C=O in carboxyl group, which indicates that pollen polysaccharide 3 contains a certain amount of uronic acid. There is an absorption peak at 1,619 cm⁻¹, which can be attributed to crystal water. There are absorption peaks at 1,423 cm⁻¹, 1,145 cm⁻¹ and 1,091 cm⁻¹, which can be attributed to C-O stretching vibration. There is an absorption peak at 895 cm⁻¹, which can be attributed to the C-H angular vibration of β-end-group epimer of pyranoid ring.

The invention provides a pollen polysaccharide 4, the main repeated structural units of which are as follows:

| | |
|---|---|
| Main Chain | 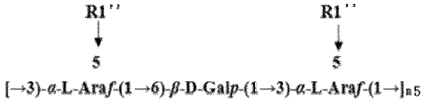 |
| Branch Chain | **→3)-*β*-D-Gal*p*-(1→6)-*β*-D-Gal*p*-(1→** |

Where, R1" is T-α-L-Ara*f-*(1→5)-α-L-Ara*f-*(1→.

In the invention, Ara represents arabinose; Gal represents galactose; ***f*** represents the furanose configuration; ***p*** represents the pyranose configuration; T represents the terminal (terminal group) of polysaccharide molecule.

Among them, the molar content ratio of arabinose to galactose is equal to 0.686: 0.243.

The pollen polysaccharide 4 of the invention contains the following trace monosaccharide units besides the main repeated structural units: fucose, glucose, xylose, mannose and galacturonic acid.

In the invention, the average molecular weight of pollen polysaccharide 4 is 5 ~ 15KDa;

Furthermore, the average molecular weight of pollen polysaccharide 4 is 9 ~ 11KDa;

In the invention, the average molecular weight of pollen polysaccharide 4 is 10 ~ 11KDa, for example 10328.089 Da.

The infrared spectrum of the pollen polysaccharide 4 of the invention comprises at least one or more of the following absorption peaks: 3,322 cm⁻¹, 2,931 cm⁻¹, 2,875 cm⁻¹, 1,641 cm⁻¹, 1,544 cm⁻¹, 1,407 cm⁻¹, 1,309 cm⁻¹, 1,241 cm⁻¹, 1,076 cm⁻¹, 1,047 cm⁻¹, 894 cm⁻¹.

The infrared absorption band of pollen polysaccharide 4 is the stretching vibration absorption peak of-OH at 3,600-3,200 cm⁻¹, and the absorption peak in this region is the characteristic peak of carbohydrates. The details are as follows: 3,322 cm⁻¹ is the stretching vibration absorption peak of O-H, which is the characteristic peak of carbohydrates. There is an absorption peak at 2,931 cm⁻¹ and 2,875 cm⁻¹, which can be attributed to C-H stretching vibration. There is an absorption peak at 1,641 cm⁻¹, which can be attributed to crystal water. There is an absorption peak at 1,544 cm⁻¹, which can be attributed to C = O stretching vibration. There is an absorption peak at 1,407 cm⁻¹, which can be attributed to C-O stretching vibration. There are absorption peaks at 1,309 cm⁻¹, 1,241 cm⁻¹, 1,076 cm⁻¹ and 1,047 cm⁻¹, which can be attributed to O-H variable angle vibration. There is an absorption peak at 894 cm⁻¹, which can be attributed to the C-H angular vibration of β-end-group epimer of pyranoid ring.

In the invention, the value of n1-n5 depends on the molecular weight of polysaccharide.

The invention also aims to provide a method for separating the pollen polysaccharide, which comprises the following contents:
The invention discloses a method for separating pollen polysaccharide as described above. The method for separating pollen polysaccharide 1 comprises the following contents:
(1) Rape pollen polysaccharide (RPP) extract is purified by macroporous adsorption resin column and eluted with water to obtain the pollen polysaccharide active moiety Fr-1;
(2) Fr-1 is passed through an ion exchange chromatography column and eluted with water to obtain pollen polysaccharide active moiety Fr-1-1;
(3) The pollen polysaccharide active moiety Fr-1-1 is further purified by SephadexG chromatography column, in which ammonium bicarbonate aqueous solution is used as eluent to obtain pollen polysaccharide 1;

The separation method of pollen polysaccharide 2 includes the following contents:
(1) RPP extract is purified by macroporous adsorption resin column and eluted with water to obtain the preliminarily purified pollen polysaccharide active moiety Fr-1;
(2) The pollen polysaccharide active moiety Fr-1 is passed through an anion exchange chromatography column and subjected to gradient elution with 0 - 0.025 mol/L NaCl solution, and the 0.025 mol/L NaCl eluent is collected to obtain pollen polysaccharide active moiety Fr-1-2;
(3) The pollen polysaccharide active moiety Fr-1-2 is further purified by SephadexG chromatography column, in which ammonium bicarbonate aqueous solution is used as eluent to obtain pollen polysaccharide 2;

The separation method of pollen polysaccharide 3 includes the following contents:
(1) RPP extract is purified by macroporous adsorption resin column and eluted with water to obtain the preliminarily purified pollen polysaccharide active moiety Fr-1;
(2) The pollen polysaccharide active moiety Fr-1 is passed through an anion exchange chromatography column and subjected to gradient elution with 0 - 0.05 mol/L NaCl solution, and the pollen polysaccharide in 0.05 mol/L NaCl solution is collected to obtain pollen polysaccharide active moiety Fr-1-3;
(3) The pollen polysaccharide active moiety Fr-1-3 is further purified by SephadexG chromatography column, in which ammonium bicarbonate aqueous solution is used as eluent to obtain pollen polysaccharide 3;

The separation method of pollen polysaccharide 4 includes the following contents:
(1) RPP extract is purified by macroporous adsorption resin column and eluted with water to obtain the preliminarily purified pollen polysaccharide active moiety Fr-1;
(2) The pollen polysaccharide active moiety Fr-1 is passed through an anion exchange chromatography column and subjected to gradient elution with 0 - 0.25 mol/L NaCl solution, and the pollen polysaccharide in 0.25 mol/L NaCl solution is collected to obtain pollen polysaccharide active moiety Fr-1-4;
(3) The pollen polysaccharide active moiety Fr-1-4 is further purified by SephadexG chromatography column, in which ammonium bicarbonate aqueous solution is used as eluent to obtain pollen polysaccharide 4.

The pollen polysaccharide active moiety Fr-1 on the ion exchange column, can be in the form of the original eluent of macroporous resin, the concentrated solution of the original eluent, or the compound solution after the concentrated and dried original eluent, etc.

The pollen polysaccharide active moietys Fr-1-1, Fr-1-2, Fr-1-3, Fr-1-4 on the gel chromatography column can be in the form of original eluent of the ion exchange column, the concentrated solution of the original eluent, or the compound solution after the concentrated and dried original eluent, etc.

The concentration and drying method of the invention includes but is not limited to conventional operation means such as vacuum evaporation, atmospheric evaporation, oven drying, vacuum drying, film drying, freeze drying, etc, which can be used alone or in combination.

The RPP extract in the step (1) refers to the crude RPP obtained by the conventional method. The conventional methods of the present invention include, but are not limited to, water extraction and preliminary purification after water extraction.

The water extraction includes but is not limited to conventional plant extract extraction methods such as heating extraction, ultrasonic extraction, microwave extraction, etc.

At the same time, according to different situations, impurity removal can be carried out by degreasing and decolorization before extraction, for example, fat-soluble solvents, such as ethanol and petroleum ether, can be used for extraction, degreasing and decolorization.

The preliminary purification method after water extraction includes but is not limited to different methods such as ethanol precipitation, decontamination by chitosan, etc.

In the purification method, auxiliary means such as protein removal, decolorization and small molecule removal can be selectively added according to different situations, which is convenient for the subsequent enrichment process of polysaccharide. For example, deproteinizing reagents such as phenol, trichloroacetic acid, tannic acid and so on can be used; adsorbents such as cellulose, diatomite, activated carbon, etc. can be used for decolorization; small molecules can be removed by dialysis and other methods.

In some specific implementation protocols of the invention, the RPP extract in step (1) refers to the crude pollen polysaccharide obtained after water extraction and ethanol precipitation method of rape pollen.

The water extraction and ethanol precipitation refer to adding ethanol into the water extraction solution to reach a certain alcohol content, and reducing the solubility of some components in the mixed solution to precipitate.

In the present invention, if the water extraction and ethanol precipitation method is selected, ethanol is added into the water extract (or the concentrated solution of the water extract) until the ethanol concentration reaches 70-90% v/v, for example, 70%, 71%, 72%, 73%, 74%, 75%, 80%, 85%, 90% v/v etc. can be selected during ethanol precipitation.

In some specific implementation protocols of the invention, the RPP extract in step (1) refers to the crude pollen polysaccharide of rape pollen heated and extracted in water, and decontaminated by chitosan.

In some specific embodiments of the invention, rape pollen may be subjected to ultrafine grinding to facilitate extraction of polysaccharides.

In some specific embodiments of the present invention, the pollen polysaccharide extract of rape pollen can be made into pollen crude polysaccharide solid by vacuum freeze-drying.

In the technical protocol of the invention, the macroporous resin column used in the step (1) is a non-polar column.

In this invention, the macroporous resin column includes but is not limited to DB-101 macroporous resin column, S-8 macroporous resin column, AB-8 macroporous resin column and HP-20 macroporous resin column; Further, the macroporous resin column is selected from HP-20 macroporous resin column.

In some embodiments of the invention, the pollen polysaccharide active moiety Fr-1 preliminarily purified in the step (1) can be dialyzed and freeze-dried to obtain solid for later use; The active moietys Fr-1-1, Fr-1-2, Fr-1-3 and Fr-1-4 of pollen polysaccharide in the step (2) are dialyzed and freeze-dried to obtain solid for later use;

In the present invention, the cut-off molecular weight of dialysis is at least 3,500Da.

In the technical protocol of the invention, the ion exchange column used in the step (2) is an anion exchange column, and the anion includes but is not limited to different ion exchange columns such as DEAE cellulose, DEAE-agarose gel, DEAE-glucose gel, etc, and is further selected from the DEAE cellulose-52 chromatography column.

In the technical protocol of the invention, the gel chromatography column used in the step (3) includes, but is not limited to, different gel chromatography columns such as a SephadexG chromatography column, a polyacrylic acid gel ToyopearlHW chromatography column, tec; For example, it can be selected from acryl SephadexG S-400 HR chromatography column, SephadexLH-20 chromatography column, etc.;

In the technical protocol of the invention, in step (3), the concentration of ammonium bicarbonate aqueous solution is 0.1 ~ 0.3 mol/L, preferably 0.2 mol/L.

In some specific embodiments of the invention, the sugar content in steps (2) and (3) is detected by a phenol-sulfuric acid method, and the absorption value at 490 nm is detected.

This invention also provides an active moiety Fr-1 of RPP, which is obtained by purifying the RPP extract by macroporous adsorption resin column and eluting the extract with water.

In this invention, the macroporous resin column is a non-polar column; Further selected from one of DB-101 macroporous resin column, S-8 macroporous resin column, AB-8 macroporous resin column and HP-20 macroporous resin column; Further, the macroporous resin column is selected from HP-20 macroporous resin column.

In some embodiments of the invention, the pollen polysaccharide active moiety Fr-1 purified by the macroporous resin column can be dialyzed and freeze-dried to obtain its solid;

Further, the cut-off molecular weight of dialysis substance is at least 3,500Da.

This invention also provides an active moiety Fr-1-5 of RPP, which is obtained by the following method: the RPP extract is purified by macroporous resin, and then passed through an ion exchange chromatography column and eluted by 0 - 0.25 mol/L sodium chloride solution to obtain the active moiety Fr-1-5.

The ion exchange chromatography column of the invention is an anion exchange chromatography column; further selected from DEAE cellulose chromatography column.

In some embodiments of the invention, the pollen polysaccharide active moiety Fr-1-5 purified by the macroporous resin column can be dialyzed and freeze-dried to obtain its solid;

Further, the cut-off molecular weight of dialysis substance mentioned is at least 3,500Da.

In some embodiments of the present invention, the RPP extract refers to the crude pollen polysaccharide of rape pollen that has been degreased in ethanol, heated and extracted, and alcoholic precipitated to remove impurities.

The invention also provides a pollen polysaccharide active moiety Fr, which is obtained by the following method: rape pollen is extracted with water, supernatant is taken, concentrated, and the active moiety Fr is obtained by ethanol precipitation with absolute ethanol. After ethanol precipitation, if the conventional washing operation is carried out with organic solvents such as ether and acetone, the washed products still belong to the category of Fr.

In the ethanol precipitation, ethanol is added to the water extract (or the concentrated solution of the water extract) until the ethanol concentration reaches 70-90% v/v, for example, 70%, 71%, 72%, 73%, 74%, 75%, 80%, 85%, 90% v/v etc. can be selected.

In the present invention, during concentration, the degree of concentration can be determined by technicians in the field according to the amount of eluent added during elution and the final demand of the product.

The various extracts in the present invention can exist in different forms, such as solid, liquid, suspension, etc. According to the actual production, sales, use and other needs, routine product form adjustment can be made.

The invention also aims at the application of pollen polysaccharide 1-4, pollen polysaccharide active moiety Fr, pollen polysaccharide active moiety Fr-1 or pollen polysaccharide active moiety Fr-1-5 in preparing plant stress-resistant products.

The plant stress resistance comprises resistances to cold, drought, high temperature, and saline-alkali, etc.

In the invention, the product containing pollen polysaccharide is applied to the surface of plant leaves or plant roots when used.

When the pollen polysaccharide product of the invention is made into solution for use, the concentration of main active ingredients can be selected according to actual needs.

For example, the concentration of pollen polysaccharide 1-4 can be selected from 0.01 ppm ~ 5 00ppm; 0.01 ppm ~ 100 ppm; 0.01 ppm ~ 50 ppm; It can also be selected from 0.03 ppm, 0.05 p pm, 0.1 ppm, 0.2 ppm, 0.5 ppm, 1.0 ppm, 3.0 ppm, 5.0 ppm, 10 ppm, 20 ppm, 30 ppm, etc.

For example, the concentration of pollen polysaccharide active moiety Fr can be selected from 0.01 ppm ~ 500 ppm; 0.01 ppm ~ 100 ppm; 0.01 ppm ~ 50 ppm; it can also be selected from 0.0 3 ppm, 0.05 ppm, 0.1 ppm, 0.2 ppm, 0.5 ppm, 1.0 ppm, 3.0 ppm, 5.0 ppm, 10 ppm, 20 ppm, 30 ppm, etc.

For example, the concentration of pollen polysaccharide active moiety Fr-1 can be selected from 0.01 ppm ~ 500 ppm; 0.01 ppm ~ 100 ppm; 0.01 ppm ~ 50 ppm; it can also be selected from 0. 03 ppm, 0.05 ppm, 0.1 ppm, 0.2 ppm, 0.5 ppm, 1.0 ppm, 3.0 ppm, 5.0 ppm, 10 ppm, 20 ppm, 30 ppm, etc.

For example, the concentration of pollen polysaccharide active moiety Fr-1-5 can be selected fro m 0.01 ppm ~ 500 ppm; 0.01 ppm ~ 100 ppm; 0.01 ppm ~ 50 ppm; it can also be selected from 0.03 ppm, 0.05 ppm, 0.1 ppm, 0.2 ppm, 0.5 ppm, 1.0 ppm, 3.0 ppm, 5.0 ppm, 10 ppm, 20 ppm, 30 ppm, etc.

The invention also aims at the application of pollen polysaccharide 1-4, pollen polysaccharide active moiety Fr, pollen polysaccharide active moiety Fr-1 or pollen polysaccharide active moiety Fr-1-5 in the preparation of plant growth-promoting products.

The plants described in the present invention include but are not limited to cash crops, food crops, such as pakchoi, Baby Chinese cabbage, asparagus lettuce, romaine lettuce, Brassica chinensis L., wheat, pepper, tomato, citrus, kiwi fruit, cherry, pear, apple, tobacco, etc.

There are many kinds of "cash crops", including but not limited to fiber crops (such as cotton, hemp, etc.), oil-bearing crops (such as sesame, peanut, etc.), sugar crops (such as sugar cane, sugar beet, etc.), habitual crops (tobacco), medical crops, dye crops, ornamental crops, fruits and other cash crops, etc.

The "food crops" include but are not limited to tuber crops (wheat, rice, corn), tuberous crops (including sweet potatoes, potatoes, etc.) and legume crops (including soybeans, broad beans, peas, mung beans, etc.).

The invention also provides an agricultural product, wherein the active ingredients of the product comprise pollen polysaccharide 1-4, pollen polysaccharide active moiety Fr, pollen polysaccharide active moiety Fr-1 or pollen polysaccharide active moiety Fr-1-5.

The promotion of plant growth includes promoting plant germination and promoting the growth of one or more of roots, stems, leaves or flowers and fruits. For example, promoting the growth of root length, stem diameter, plant height, leaf width, leaf length, leaf number, leaf area, biomass, chlorophyll content, yield, etc.

In this invention, pollen polysaccharide 1-4, pollen polysaccharide active moiety Fr, pollen polysaccharide active moiety Fr-1 or pollen polysaccharide active moiety Fr-1-5 can be directly used as a single dose. In order to make the product stable and convenient for transportation and preservation, excipient can also be added to prepare corresponding dosage forms, and the excipient can be conventional excipient in the field, such as dispersing agent, wetting agent, plastering agent, emulsifying agent, stabilizer, solvent, entrapment agent, etc.

On the other hand, the pollen polysaccharide 1-4, the pollen polysaccharide active moiety Fr, the pollen polysaccharide active moiety Fr-1 or the pollen polysaccharide active moiety Fr-1-5 can be used as synergistic agent and combined with foliar fertilizer, water-soluble fertilizer, compound fertilizer, pesticide, etc.

The dosage forms of the products in the invention include but are not limited to conventional agricultural products preparations such as oil emulsion, suspending agent, wettable powder, powder, granule, aqueous solutions, mother liquor and mother powder.

The invention has the beneficial effects that:
This invention discovers a new pollen polysaccharide 1-4, which is isolated from rape pollen for the first time. The polysaccharide can be used for plant stress resistance and growth promotion. The invention also discovers that the pollen polysaccharide active moiety Fr, the pollen polysaccharide active moiety Fr-1 or the pollen polysaccharide active moiety Fr-1-5, which are coarse separated components of rape pollen, also have the effects of plant growth promotion and stress resistance.

The "rape" in the invention is a Cruciferae and Brassica herbaceous crop, and the common "rape" includes but is not limited to B.rapa, B.napus, B.nigra, B.juncea, and Ethiopian mustard, etc. The "pollen" of the invention is taken from the "rape".

### BRIEF DESCRIPTION OF THE DRAWINGS

Figure 1: Gradient elution curve of pollen polysaccharide on DEAE cellulose-52 anion exchange column;
Figure 2: Elution curve of pollen polysaccharide 1-4 on S-400 HR acryl SephadexG column;
Figure 3: Standard curve of molecular weight distribution of sephadex standard;
Figure 4: HPGPC determination chromatogram of pollen polysaccharide pure 1-4;
Figure 5: Monosaccharide mixed label and pollen polysaccharide ion chromatogram (A: monosaccharide mixed label; B: pollen polysaccharide 1; C: pollen polysaccharide 2; D: pollen polysaccharide 3; E: pollen polysaccharide 4), in which monosaccharide mixture standard: 1. rhamnose (Rha) 2. fucose (Fuc) 3.
arabinose (Ara) 4. xylose (Xyl) 5. mannose (Man) 6. glucose (Glc) 7. galactose (Gal) 8. glucuronic acid (GlcA) 9. galacturonic acid (GalA); Solvent peaks: 2.0 min is the peak of sodium hydroxide and 40 min is the peak of sodium acetate.
Figure 6: Total ion flow chat (TIC) of pollen polysaccharide 1 methylation analysis;
Figure 7: Mass spectrum of methylated PMAAs belonging to pollen polysaccharide 1;
Figure 8: ¹H-NMR spectrum of pollen polysaccharide 1;
Figure 9: ¹³C-NMR spectrum of pollen polysaccharide 1;
Figure 10: DEPT-135 NMR spectrum of pollen polysaccharide 1;
Figure 11: HSQC spectrum of pollen polysaccharide 1;
Figure 12: COSY spectrum of pollen polysaccharide 1;
Figure 13: TOCSY spectrum of pollen polysaccharide 1;
Figure 14: HMBC spectrum of pollen polysaccharide 1;
Figure 15: Ultraviolet absorption spectrum of pollen polysaccharide 1;
Figure 16: Infrared absorption spectrum of pollen polysaccharide 1;
Figure 17: Separation flow chart of pollen polysaccharide 1 - 4 and active moietys of pollen polysaccharide Fr, Fr-1 and Fr-1-5;
Figure 18: Total ion flow chat (TIC) of pollen polysaccharide 2 methylation analysis;
Figure 19: Mass spectrum of methylated PMAAs belonging to pollen polysaccharide 2;
Figure 20: ¹H-NMR spectrum of pollen polysaccharide 2;
Figure 21: ¹³C-NMR spectrum of pollen polysaccharide 2;
Figure 22: DEPT-135 NMR spectrum of pollen polysaccharide 2;
Figure 23: HSQC spectrum of pollen polysaccharide 2;
Figure 24: COSY spectrum of pollen polysaccharide 2;
Figure 25: TOCSY spectrum of pollen polysaccharide 2;
Figure 26: HMBC spectrum of pollen polysaccharide 2;
Figure 27: Ultraviolet absorption spectrum of pollen polysaccharide 2;
Figure 28: Infrared absorption spectrum of pollen polysaccharide 2;
Figure 29: Total ion flow chat (TIC) of pollen polysaccharide 3 methylation analysis;
Figure 30: Mass spectrum of methylated PMAAs belonging to pollen polysaccharide 3;
Figure 31: ¹H-NMR spectrum of pollen polysaccharide 3;
Figure 32: ¹³C-NMR spectrum of pollen polysaccharide 3;
Figure 33: DEPT-135 NMR spectrum of pollen polysaccharide 3;
Figure 34: HSQC spectrum of pollen polysaccharide 3;
Figure 35: COSY spectrum of pollen polysaccharide 3;
Figure 36: NOSEY spectrum of pollen polysaccharide 3;
Figure 37: HMBC spectrum of pollen polysaccharide 3;
Figure 38: Ultraviolet absorption spectrum of pollen polysaccharide 3;
Figure 39: Infrared absorption spectrum of pollen polysaccharide 3;
Figure 40: Total ion flow chat (TIC) of pollen polysaccharide 4 methylation analysis;
Figure 41: Mass spectrum of methylated PMAAs belonging to pollen polysaccharide 4;
Figure 42: ¹H-NMR spectrum of pollen polysaccharide 4;
Figure 43: ¹³C-NMR spectrum of pollen polysaccharide 4;
Figure 44: DEPT-135 NMR spectrum of pollen polysaccharide 4;
Figure 45: HSQC spectrum of pollen polysaccharide 4;
Figure 46: COSY spectrum of pollen polysaccharide 4;
Figure 47: TOCSY spectrum of pollen polysaccharide 4;
Figure 48: HMBC spectrum of pollen polysaccharide 4;
Figure 49: Ultraviolet absorption spectrum of pollen polysaccharide 4;
Figure 50: Infrared absorption spectrum of pollen polysaccharide 4.

### Specific implementation methods

A clear and complete description of the technical protocols of the present invention is made below, although of course the described embodiments are part of and not all of the embodiments of the present invention. Based on the embodiments in the present invention, all other embodiments obtained by those skilled in the field without making creative efforts are within the scope of protection of the present invention. It should be noted that the following processes, if not specifically described in detail, can be realized or understood by those skilled in this field with reference to existing technologies. The reagents or instruments used, where the manufacturer is not specified, are considered to be commercially available conventional products.

### Embodiment 1 Preparation of pollen polysaccharide extract

Ultrafine pulverize rape pollen into powder to obtain pretreated pollen powder. Weigh 5.0 g of pretreated pollen powder, remove free monosaccharides by ethanol, degrease and decolorize by petroleum ether, heat and extract by water, and precipitate by alcohol. Collect the precipitates, and wash the precipitates with absolute ethanol, ether and acetone in turn. Finally, the washed precipitate was re-dissolved with water, pre-frozen at-20°C, and vacuum freeze-dried to obtain crude pollen polysaccharide extracted by hot water.

### Embodiment 2 Preparation of pollen polysaccharide extract

Mixing rape pollen with water, heating and extracting, filtering, adding chitosan into the filtrate, keeping warm and standing till solid-liquid separation, and the obtained liquid is crude pollen polysaccharide extract. After the extract was concentrated under reduced pressure, it was pre-frozen at-20°C and freeze-dried in vacuum to obtain crude pollen polysaccharide.

### Embodiment 3 Preparation of pollen polysaccharide extract

Ultrafine pulverize rape pollen into powder to obtain pretreated pollen powder. Weigh 5.0 g of pretreated pollen powder, remove free monosaccharides by ethanol, degrease and decolorize by petroleum ether, ultrasonically extracted, and precipitate by alcohol. Collect the precipitates, and wash the precipitates with absolute ethanol, ether and acetone in turn. Finally, the washed precipitate was re-dissolved with water, pre-frozen at-20°C, and vacuum freeze-dried to obtain crude pollen polysaccharide extracted by hot water.

### Embodiment 4 Preparation of pollen polysaccharide active moiety Fr

Ultrafine pulverize rape pollen into powder to obtain pretreated pollen powder. Weigh 5.0 g of pretreated pollen powder, remove free monosaccharides by ethanol, degrease and decolorize by petroleum ether, heat and extract by water, and precipitate by alcohol. During ethanol precipitation, the concentration of ethanol in the solution after addition with ethanol is about 75% ~ 85%. Collect the precipitate and get the active moiety Fr of crude pollen polysaccharide.

### Embodiment 5 Isolation and purification of polysaccharide

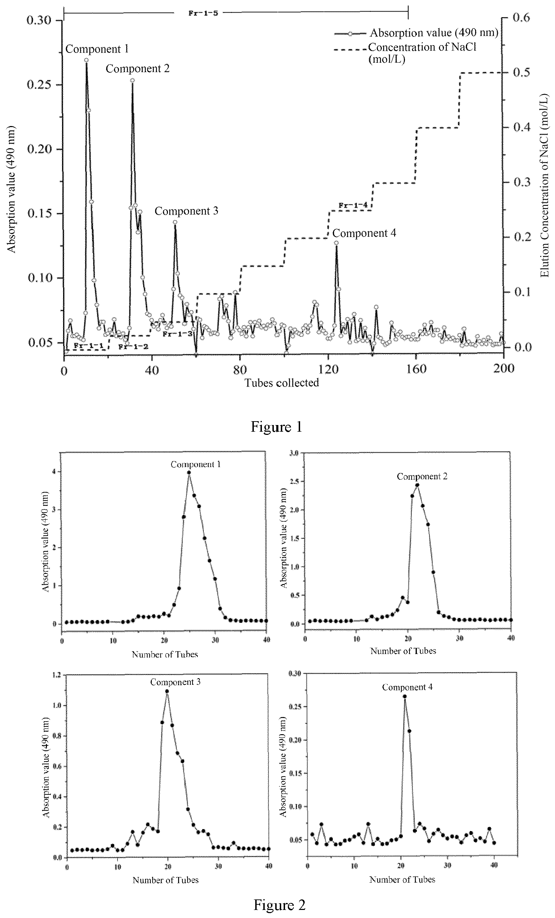

The separation process of pollen polysaccharide 1 ~ 4 and the active moietys of pollen polysaccharide Fr, Fr-1, Fr-1-5 is as follows:
**Step (1) Purification by HP-20 macroporous adsorption resin chromatography column:** The HP-20 macroporous adsorption resin chromatography column (Φ 4.0 cm × 40 cm) is used for preliminary purification of crude pollen polysaccharide, and the specific steps are as follows: weigh a certain amount of crude pollen polysaccharide (in this embodiment, taking the crude pollen polysaccharide prepared by the method of Embodiment 4 as an example for further separation and purification explanation, and the crude pollen polysaccharide obtained by other methods is also applicable to the separation and purification method of the invention), add a certain amount of water, and prepare 10-20 mg/mL crude pollen polysaccharide solution, with a single sample amount of 10 mL. After adsorption on HP-20 macroporous adsorption resin column for 3 hours, the column is washed with 5 times of column volume water, and samples are collected to obtain pollen polysaccharide active moiety Fr-1, which is concentrated under reduced pressure at 48 °C, dialyzed (3500Da), and freeze-dried for later use.
**Step (2) Separation and purification by DEAE cellulose-52 chromatography column:** the pollen polysaccharide active moiety Fr-1 is separated and purified with DEAE cellulose-52 chromatographic column (Φ 3.5 cm × 30 cm). The specific steps are as follows: (i) Sampling 100 mg pollen polysaccharide active moiety Fr-1 solution; (ii) Elution, and the eluent is water, 0.025, 0.05, 0.1, 0.15, 0.2, 0.25, 0.3, 0.4 and 0.5 mol/L NaCl solution in turn, flow rate is 1.2 mL/min, collect 6 mL from each tube; (iii) Collection, the sugar content is detected by phenol-sulfuric acid method in spaced tubes, and the absorption value at 490 nm is detected by a microplate reader, and the elution curve is drawn with the number of collection tubes as X-axis and the absorption value of collection liquid as Y-axis (Figure 1). Each NaCl elution peak is collected and the same components were combined to obtain each graded component of pollen polysaccharide (pollen polysaccharide active moiety Fr-1-1, pollen polysaccharide active moiety Fr-1-2, pollen polysaccharide active moiety Fr-1-3, pollen polysaccharide active moiety Fr-1-4). The pollen polysaccharide active moiety Fr-1-5 is obtained from the site eluted by 0 ~ 0.25 mol/L NaCl solution. The active moiety is concentrated under reduced pressure at 48°C, desalted by dialysis (3,500Da), and freeze-dried for later use.

As can be seen from Figure 1, crude pollen polysaccharide was eluted with different concentrations of NaCl solution by DEAE cellulose-52 anion exchange column to obtain four elution peaks: water elution component (pollen polysaccharide active moiety Fr-1-1), 0.025 mol/L NaCl solution elution component (pollen polysaccharide active moiety Fr-1-2), 0.05 mol/L NaCl solution elution component (pollen polysaccharide active moiety Fr-1-3) and 0.25 mol/L NaCl solution elution component (pollen polysaccharide active moiety Fr-1-4). The eluent corresponding to each elution peak was collected to obtain the preliminary classification of pollen polysaccharide: pollen polysaccharide active moiety Fr-1-1, pollen polysaccharide active moiety Fr-1-2, pollen polysaccharide active moiety Fr-1-3 and pollen polysaccharide active moiety Fr-1-4, which were concentrated under reduced pressure, dialyzed and freeze-dried for later use.

**Step (3) Purification by S-400 HR acryl SephadexG chromatography column:** At last, each graded component of pollen polysaccharide was further purified by the acryl SephadexG S-400 HR chromatography column (Φ 1.0 cm × 100 cm). The specific steps are as follows: (i) Sampling each graded component solution with a single sample amount of 20 mg; (ii) Elution, using 0.2 mol/L ammonium bicarbonate as elution phase, with flow rate 0.2 mL/min, collecting 3 mL from per tube, continuously eluting until sugar-free detection, collecting 40 tubes of eluent for each component; (iii) Collection, the sugar content is detected by phenol-sulfuric acid method in spaced tubes, the absorption value at 490 nm is detected by a microplate reader, the elution curve is drawn, and the same components were combined. The purified components of each pollen polysaccharide are obtained after concentrated under reduced pressure at 48°C, desalted (3,500Da) to remove ammonia, and freeze-dried.

The four pollen polysaccharide components (pollen polysaccharide active moiety Fr-1-1, pollen polysaccharide active moiety Fr-1-2, pollen polysaccharide active moiety Fr-1-3, pollen polysaccharide active moiety Fr-1-4) obtained from the DEAE cellulose-52 anion exchange column are further purified by passing through a S-400 HR acryl SephadexG chromatography column and eluted with 0.2 mol /L ammonium bicarbonate separately. As can be seen from Figure 2, after elution with 0.2 mol/L ammonium bicarbonate, single elution peaks are obtained for all four components, and the corresponding components are named as component 1, component 2, component 3 and component 4, respectively. The eluates corresponding to the elution peaks are collected separately (component 1: tubes 21-31; component 2: tubes 20-26; component 3: tubes 18-26; component 4: tubes 20-23), and the four purified pollen polysaccharides are obtained by concentration under reduced pressure, dialysis and freeze-drying.

### Purity identification and molecular weight determination of pollen polysaccharide

Methods: High Performance Liquid Gel Permeation Chromatography (HPGPC) was used to determine the purity and molecular weight of each purified component of polysaccharide. The test conditions are: Agilent 1260 series high performance liquid chromatography; Refractive index detector (RID); Shodex OHpak SB-804 HQ (7.8 mm × 300 mm) gel column; the mobile phase is 0.1 mol/L Na₂SO₄; Flow rate is 0.5 mL/min; Column box temperature is 35°C; injection volume is 20 µL; The test time of the instrument is 24 min.

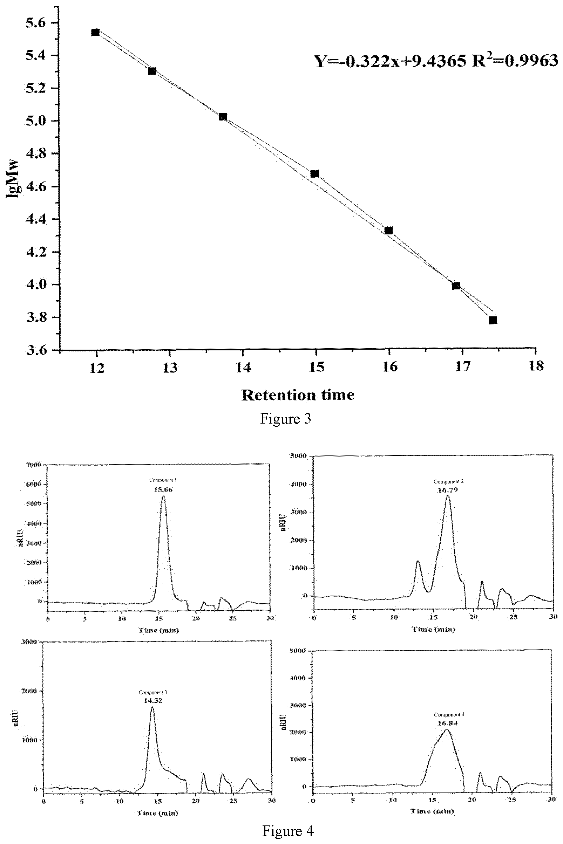

Drawing of standard curves: Sephadex standards with different molecular weights (5,900, 9,600, 21,100, 47,100, 107,000, 200,000, 341,400 Da) were dissolved in 0.1 mol/L Na₂SO₄ solution to prepare a standard solution with a concentration of 5 mg/mL, which was filtered by 0.22 µm aqueous phase filter membrane and then tested on a machine according to HPGPC test conditions, and the retention time was recorded. Taking the retention time (min) as the X-axis and the logarithmic value of the molecular weight of sephadex standard as the Y-axis, the standard curve is drawn, and the regression equation is fitted to calculate the molecular weight of different pollen polysaccharides. The obtained standard curve is y=-0. 322x+9. 4365, as shown in Figure 3.

Determination of the purity and molecular weight of pollen polysaccharide: 10 mg pollen polysaccharide was dissolved in 2 mL 0.1 mol/L Na₂SO₄ solution, and then the polysaccharide solution with a concentration of 5 mg/mL was prepared. The polysaccharide solution was filtered by 0.22 µm aqueous phase filter and then tested on a machine according to HPGPC test conditions. The chromatogram of each polysaccharide was recorded. The purity of each polysaccharide was evaluated according to the number and symmetry of peaks on the chromatogram. The molecular weight of each polysaccharide was calculated according to the retention time of each polysaccharide on the chromatogram and the molecular weight of each polysaccharide was compared with the molecular weight standard curve of sephadex standard.

The purity and molecular weight of pollen polysaccharides 1, 2, 3 and 4 were determined by HPGPC, and the results are shown in Figure 4. It can be seen from Figure 4 that there is a single symmetrical peak in HPGPC chromatogram of four pollen polysaccharides, which indicates that the purity of four pollen polysaccharides is high. The results are consistent with those of S-400 HR acryl SephadexG column, which further indicates that the method of pollen polysaccharide separation and purification was feasible, and the polysaccharide with high purity could be prepared from pollen polysaccharide. The average molecular weights of pollen polysaccharides 1-4 were calculated as 24774.22 Da, 10718.15 Da, 66911.38 Da and 10328.089 Da by comparing the peak time of pollen polysaccharides 1-4.

### Embodiment 6 Structural identification of pollen polysaccharide

### 1 Determination results of monosaccharide composition of pollen polysaccharide

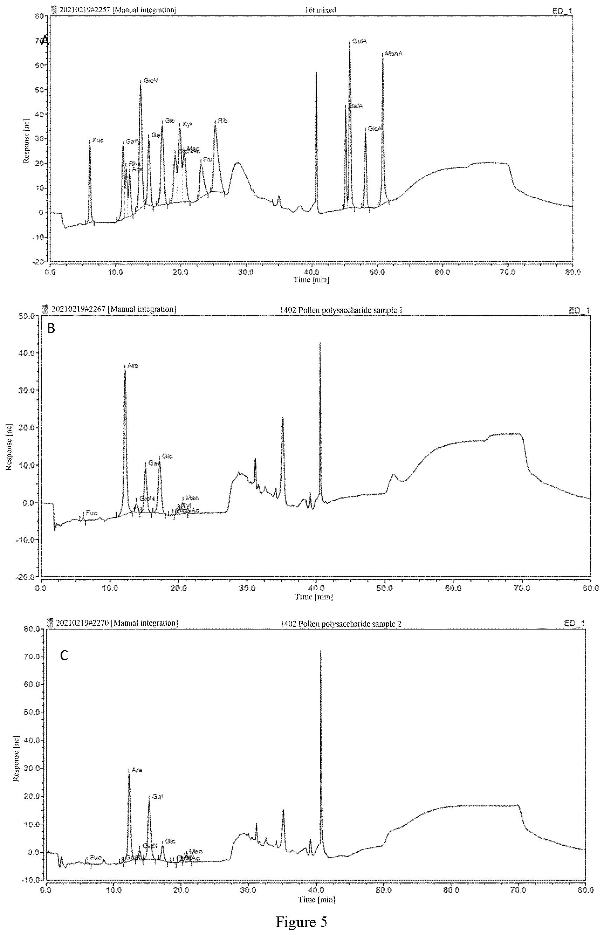

Determination method: The monosaccharide composition of pollen polysaccharide samples is determined by Ion chromatography (IC). 10 mg polysaccharide sample was precisely weighed and placed in ampoules for acid hydrolysis. Accurately absorb the acid hydrolysis solution, transfer it to the test tube to dry with nitrogen, add 5 mL distilled water, vortex and mix evenly, absorb 50 µL of the above-mentioned mixture and add 950 µL distilled water, centrifuge at 12,000 r/min for 5 min, and take the supernatant for IC analysis. At the same time, 16 monosaccharide standards (fucose, rhamnose, arabinose, galactose, glucose, xylose, mannose, fructose, ribose, galacturonic acid, glucuronic acid, D-Galactosamine hydrochloride, glucosamine hydrochloride, N-acetyl-D glucosamine, guluronic acid and manturonic acid) were prepared into standard mother liquor solution. Take the precision configuration concentration standard of each monosaccharide standard solution as the mixed standard. According to the peak time of pollen polysaccharide hydrolyzed samples in chromatography, the monosaccharide composition was judged. According to the absolute quantitative method, the mass of different monosaccharides was determined, and the molar ratio was calculated according to the molar mass of monosaccharides, C (standard)/A (standard) = C (sample)/A (sample). C is concentration and A is peak area. Chromatographic conditions: chromatographic column: DionexCarbopacTMPA20 (3*150); mobile phase: A: H₂O; B: 15 mM NaOH; C: 15 mM NaOH and 100 mM sodium acetate; flow rate: 0.3 ml/min; injection volume: 5 µL; column temperature: 30°C; detector: Electrochemical detector. As shown in Figure 5 (A), the chromatographic peaks of 16 standard monosaccharides were successfully separated and detected by ion chromatography, which has regular peak pattern and high resolution, and can well meet the simultaneous detection of common monosaccharides in monosaccharide composition analysis.

**Table 1 Monosaccharide Composition of Pollen Polysaccharide 1**

| **Name** | **RT** | Molar ratio | **Area** |
|---|---|---|---|
| Fucose | 6.092 | 0.008 | 0.217 |
| Arabinose | 12.192 | 0.671 | 16.703 |
| Galactose | 15.184 | 0.132 | 5.48 |
| Glucose | 17.225 | 0.120 | 7.213 |
| Xylose | 19.984 | 0.011 | 0.532 |
| Mannose | 20.634 | 0.046 | 1.818 |

As shown in Figure 5 (B) for the ion chromatogram of monosaccharide composition of pollen polysaccharide 1, the chromatographic peak corresponding to uronic acid is not detected in Figure 5 (B), which indicated that pollen polysaccharide 1 may not contain uronic acid and belongs to neutral saccharide. Figure 5 (B) indicated that pollen polysaccharide 1 is mainly composed of arabinose, galactose, and glucose, and contains trace amounts of xylose, fucose, and mannose. The molar ratio of each monosaccharide composition was: fucose: arabose: galactose: glucose: xylose: mannose equals 0.008:0.671:0.132:0.120:0.011: 0.046 (Table 1) by calculating each monosaccharide composition.

**Table 2 Monosaccharide Composition of Pollen Polysaccharide 2**

| **Name** | **RT** | Molar ratio | **Area** |
|---|---|---|---|
| Fucose | 6.1 | 0.010 | 0.232 |
| Arabinose | 12.3 | 0.597 | 13.118 |
| Galactose | 15.275 | 0.283 | 10.349 |
| Glucose | 17.25 | 0.048 | 2.532 |
| Xylose | 20.067 | 0.007 | 0.289 |
| Mannose | 20.817 | 0.038 | 1.331 |

As shown in Figure 5 (C) for the ion chromatogram of monosaccharide composition of pollen polysaccharide 2, the chromatographic peak corresponding to uronic acid is not detected, which indicates that pollen polysaccharide 2 may not contain uronic acid and belong to neutral saccharide. Pollen polysaccharide 2 is mainly composed of arabose and galactose. In pollen polysaccharide 2, the fucose: arabose: galactose: glucose: xylose: mannose is 0.010: 0.597: 0.283: 0.048: 0.007: 0.038 (Table 2) by calculating the area of related chromatographic peak.

**Table 3 Monosaccharide Composition of Pollen Polysaccharide 3**

| **Name** | **RT** | Molar ratio | Area |
|---|---|---|---|
| Fucose | 6.042 | 0.006 | 0.431 |
| Rhamnose | 11.625 | 0.095 | 3.756 |
| Arabinose | 12.192 | 0.328 | 24.565 |
| Galactose | 15.234 | 0.399 | 29.882 |
| Glucose | 17.209 | 0.024 | 2.144 |
| Xylose | 19.909 | 0.027 | 1.992 |
| Mannose | 20.942 | 0.010 | 0.881 |
| Galacturonic acid | 45.192 | 0.096 | 3.359 |
| Glucuronic acid | 48.292 | 0.014 | 0.511 |

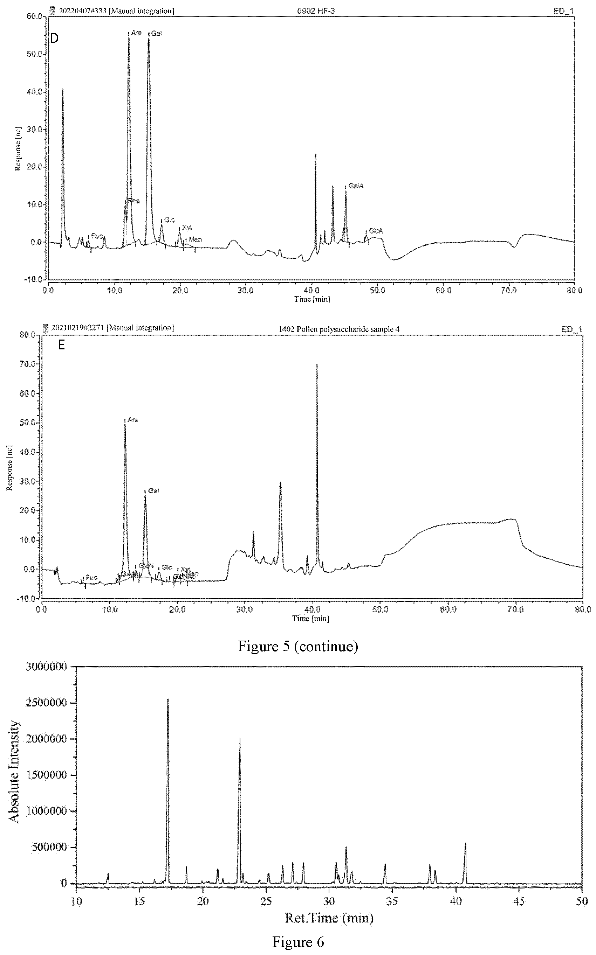

As shown in Figure 5 (D), galacturonic acid and glucuronic acid are detected, indicating that pollen polysaccharide 3 is an acidic saccharide. Pollen polysaccharide 3 mainly contains arabinose and galactose. In the pollen polysaccharides 3, fucose: rhamnose: arabinose: galactose: glucose: xylose: mannose: galacturonic acid: glucuronic acid equals 0.006: 0.095: 0.328: 0.399: 0.024: 0.027: 0.010: 0.096: 0.014 (Table 3) by calculating the area of related chromatographic peak.

**Table 4 Monosaccharide Composition of Pollen Polysaccharide 4**

| **Name** | **RT** | Molar ratio | **Area** |
|---|---|---|---|
| Fucose | 6.117 | 0.003 | 0.114 |
| Arabinose | 12.292 | 0.686 | 23.361 |
| Galactose | 15.309 | 0.243 | 13.774 |
| Glucose | 17.325 | 0.014 | 1.221 |
| Xylose | 20.084 | 0.021 | 1.468 |
| Mannose | 20.834 | 0.013 | 0.689 |
| Galacturonic acid | 45.184 | 0.009 | 0.316 |

As shown in Figure 5 (E), a small amount of galacturonic acid is detected, indicating that pollen polysaccharide 4 contains uronic acid and belonged to acidic saccharides. There are two distinct chromatographic peaks, which are arabinose and galactose from left to right. In pollen polysaccharide 4, fucose: arabinose: galactose: glucose: xylose: mannose: galacturonic acid equals 0.003: 0.686:0.243: 0.014: 0.021: 0.013: 0.009 (Table 4) by calculating the area of related chromatographic peak.

### 2. Analysis of Pollen Polysaccharide Methylation and NMR Results

### 2.1 Construction of Pollen Polysaccharide 1

### 2.1.1 Determined Methylation Results

In order to investigate the primary structure of pollen polysaccharide 1, the improved Needs method is used to methylate the pollen polysaccharide 1. Acid reduction is not required because pollen polysaccharide 1 belonged to neutral saccharides, the capillary column for gas chromatography-mass spectrometry analysis is RXI-5 SIL MS. The structure and content of monosaccharide is analyzed by gas chromatography-mass spectrometry to determine the linkage site of residues of glycosidic bond for related monosaccharide.

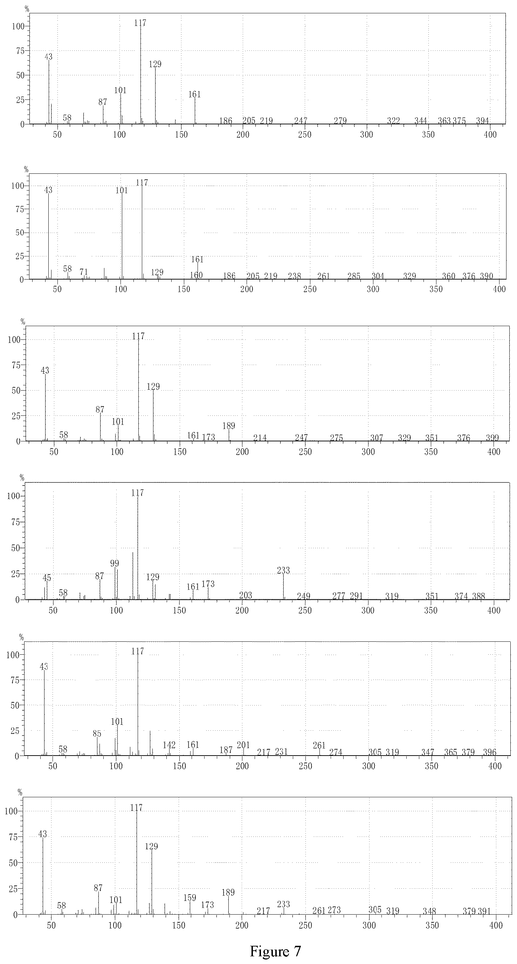

The fully methylated pollen polysaccharide 1 is treated by hydrolysis, reduction and derivatization and reformed to partially methylated PMAAs, the total ion current figure (Figure 6) of methylation analysis for pollen polysaccharide 1 may be obtained by GC-MS analysis. The type of partially methylated glycosyl is determined by comparing the mass spectrum (Figure 7) of methylated glycosyl peak with the standard spectrum library (The CCRC Spectral Database for PMAA's https://www.ccrc.uga.edu/specdb/ms/pmaa/pframe.html), meanwhile, the molar ratio is calculated based on the peak area of chromatographic peak, necessary structure information of repeating unit for pollen polysaccharide 1 is provided by combining the peak area and the result determined of monosaccharide composition.

**Table 5 The Analysis Results of Methylation for Pollen Polysaccharide 1**

| Retention Time | Product of Methylated Sugar | Major ion fragments (m/z) | Molar ratio | Type of glycosidic bond |
|---|---|---|---|---|
| 17.257 | 2-Me₁-Ara*f* | 43,71,87,101,117,129,145,161 | 0.335 | →3,5)-Ara*f*-(1→ |
| 18.703 | 2,3,5-Me₃-Ara*p* | 43,71,87,101,117,129,145,161 | 0.020 | Ara*f*-(1→ |
| 22.959 | 2,3-Me₂-Ara*f* | 43,71,87,99,101,117,129,161,189 | 0.291 | →5)-Ara*f-*(1→ |
| 31.338 | 2,3,6-Me₃-Glc*p* | 43,87,99,101,113,117,129,131,161,173,2 33 | 0.056 | →4)-Glc*p*-(1→ |
| 34.422 | 2,3,4,6-Me₄-Glc*p* | 43,87,99,101,117,129,161,189,233 | 0.026 | Glc*p*-(1→ |
| 37.956 | 2,3,4,6-Me₄-Gal*p* | 43,71,85,87,99,101,117,127,159,161,201 | 0.025 | Gal*p*-(1→ |
| 40.773 | 2,3,4-Me₃-Gal*p* | 43,87,117,129,159,189,233 | 0.065 | →6)-Gal*p*-(1→ |

### 2,3-Me₂-Araf is 1,4,5-tri-O-acetyl-2,3-di-O-methyl-L-arabinitol and so on.

Because pollen polysaccharide 1 mainly contains arabinose, galactose and glucose, while the content of xylose, fucose and mannose is too low, only PMAAs of arabinose, galactose and glucose are detected by methylation analysis, while the PMAAs of xylose, fucose and mannose are not detected. However, the low content of xylose, fucose and mannose may not affect the analysis and judgment of the major glycosidic bond of pollen polysaccharide 1. As shown in Table 5, the arabinose in pollen polysaccharide 1 exists in three bonding modes: terminal sugar,1,5-Ara*f*, 1,3,5-Ara*f*, the galactose exists in two bonding modes: terminal sugar and →6)-Galp-(1), the glucose exists in the form of terminal sugar and →4)-glcp-(1). According to the residues of glycosidic bond of pollen polysaccharide 1 and the structural characteristics of pollen polysaccharide, we may preliminarily infer that the main chain of pollen polysaccharide 1 may be bonded to other glycosidic bond by 1,3, 5-Araf; whose branch chain is complicated, which is composed by 1,5-Ara*f*, →6)-Gal*p-*(1→ and →4)-Glc*p*-(1→.

### 2.1.2 NMR Results of Pollen Polysaccharide 1

**Table 6 ¹H and ¹³C NMR Chemical Shift Attribution of Monosaccharide Residues in Pollen Polysaccharide 1**

| Monosaccharide Residues | (δ, ppm) chemical shift | |
|---|---|---|
| | C1 | H1 |
| T-α-L-Ara*f*-(1→ | 109.32 | 5.18 |
| →5)-α-L-Ara*f*-(1→ | 105.38 | 5.02 |
| →3,5)-α-L-Ara*f*-(1→ | 107.46 | 5.02 |
| →6)-*β*-D-Galp-(1→ | 103.08 | 4.46 |
| T-*β*--Gal*p*-(1→ | 103.19 | 4.42 |
| →4)-α-D-Glc*p*-(1→ | 99.72 | 5.32 |
| T-α-D-Glc*p* | 98.94 | 4.95 |

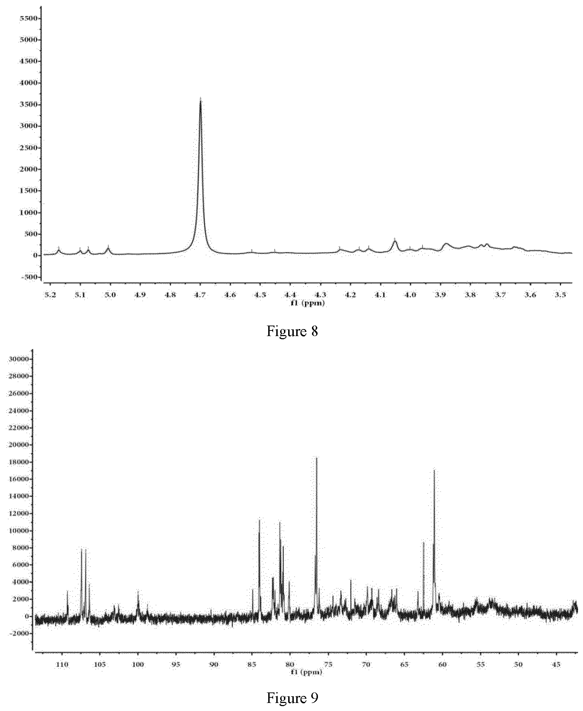

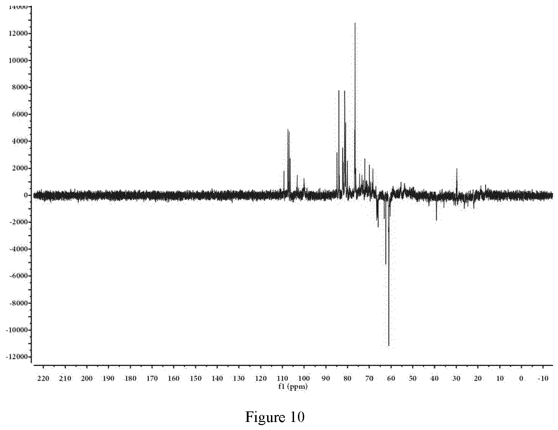

As shown in ¹H-NMR spectrum (Figure 8), ¹³C-NMR spectrum (Figure 9) and DEPT-135 spectrum (Figure 10) of pollen polysaccharide 1, in the one-dimensional spectrum, the configuration type of glycosidic bond and the composition type of monosaccharides may be inferred by terminal hydrogen and terminal carbon. In the ¹H-NMR spectrum, there are 5 obvious hydrogen signal peaks in the terminal hydrogen-related region, and their chemical shifts are 5.18 ppm, 5.02 ppm, 4.95 ppm, 4.46 ppm, and 4.42 ppm, respectively, indicating that there are not only α glycosidesis bond, but also β glycosidesis bond in pollens polysaccharide 1. According to the monosaccharide composition and methylation test results, as well as related reference reports, 5.18 ppm and 5.02 ppm may be determined as the terminal protonic hydrogen signal of arabose residues, while 4.95ppm is the terminal hydrogen signal of galactose residues. HSQC spectrum reflected the neighborhood correlation of carbon and hydrogen in polysaccharide glycoside bond, which may be combined with ¹³C-NMR spectrum to determine the position of terminal carbon. TOCSY spectrum is a complete set of hydrogen-related two-dimensional nuclear magnetic spectrum of monosaccharide residues, which may be used to locate the hydrogen on monosaccharide residues, while COSY spectrum is the correlation spectrum of o-hydrogen on monosaccharide residues, combining with the chemical shift of terminal peotons and the correlation two-dimensional spectrum, the carbon and hydrogen of each monosaccharide may be attributed.

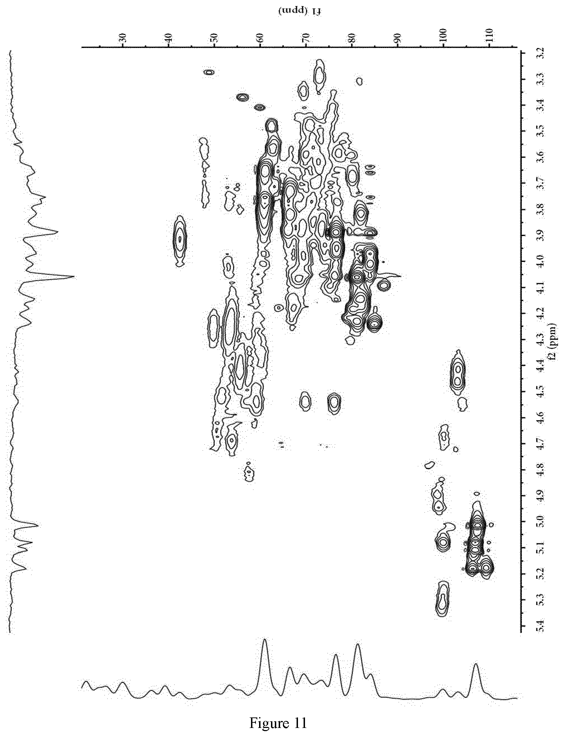

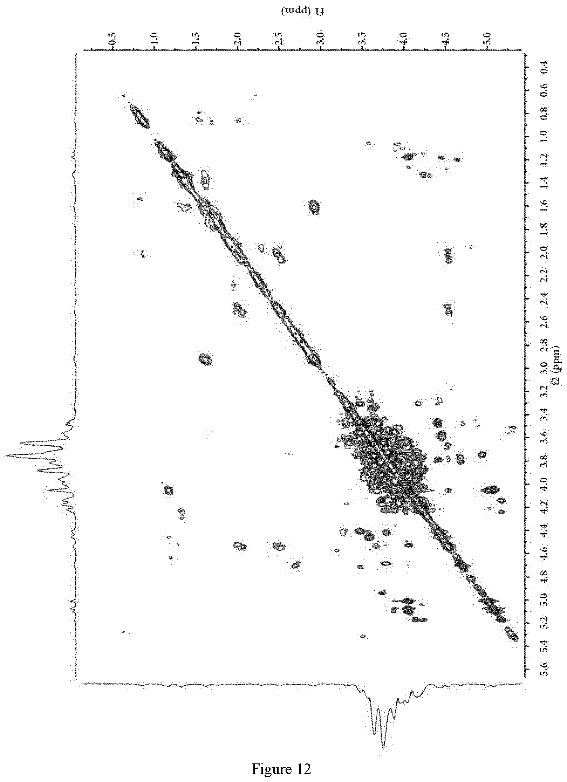

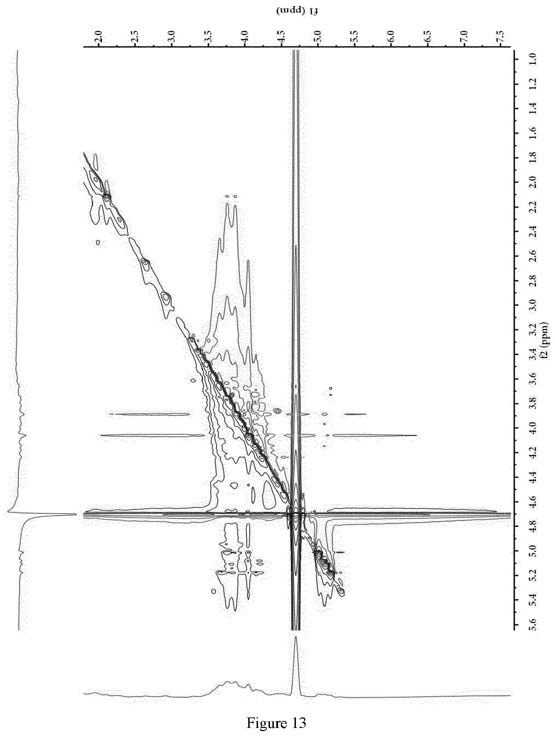

Xylose and mannose are detected in the analysis of monosaccharide composition, which also exist in methylation, that is not easily distinguished because the low content and the overlap between the related carbon and hydrogen absorption peaks and the similar monosaccharides with other bonding modes is relatively large in one-dimensional NMR spectrum, in the analysis of methylation results and NMR results, the possible types for this part of glycosidic bond are not attributed, but the content of them are low and they do not affect the inference of main structure unit of pollen polysaccharide 1. Through ¹H-NMR and ¹³C-NMR spectrum and combined with two-dimensional spectrum of HSQC (Figure 11), COSY (Figure 12), and TOCSY (Figure 13), as well as relevant reference reports and methylation test results, the attribution of carbon and hydrogen of main monosaccharide residues in pollen polysaccharide 1 is shown in Table 6.

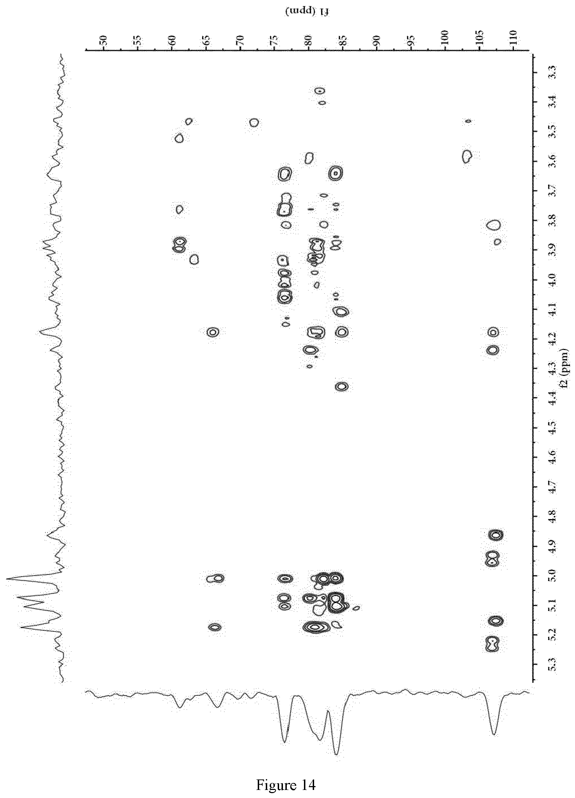

The two-dimensional NMR spectrum of HMBC reflects the spatial correlation between carbon and hydrogen, so the linkage order of monosaccharide residues may be inferred by the related two-dimensional spectrum. As shown in Figure 14, in HMBC spectrum, the relative carbon and hydrogen of each monosaccharide residue have various cross peaks, which may be analyzed to determine the linkage among monosaccharide residues.

The attribution of carbon and hydrogen to related monosaccharide residues of pollens polysaccharide 1 is determined by NMR analysis. The analysis results of the monosaccharide residues' linking mode are basically consistent with the results of methylation structure analysis, and the related glycosidic bond configuration is determined. The linkage order of different monosaccharide residues is determined by the analysis of related two-dimensional spectrum, and the molecular structural characteristics of pollen polysaccharide 1 are basically clarified. According to methylation and NMR analysis, the main chain structure of pollen polysaccharide 1 is mainly linked by α-L-1,3, 5-Araf, the branch chain is mainly composed of α-L-1,5-Araf, P-D-1,6)-Galp, β-D-1,4)-Glcp, the main repeating structural unit of pollen polysaccharide 1 is as follow: 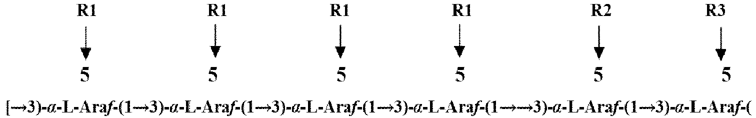 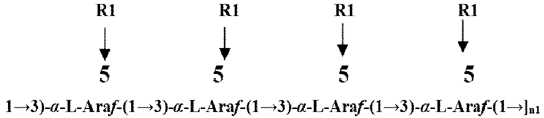 Where
**R1 is T-*α*-L-Ara*f*-(1→5)-*α*-L-Ara*f*-(1→, R2 wasT-β-D-Gal*p*-(1→6)-β-D-Gal*p*-(1→,**
**R3 is T-α-D-Glc*p*-(1→4)-α-D-Glc*p*-(1→**

### 2.1.3 Determined UV Spectrum Results

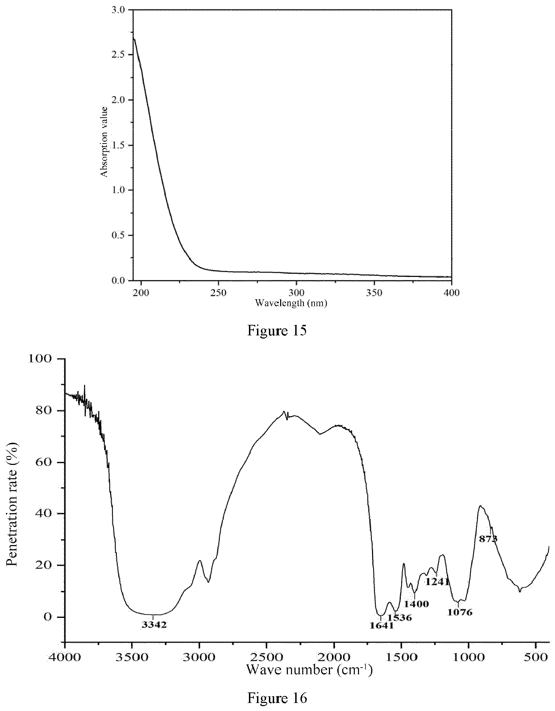

As shown in Figure 15, the pollen polysaccharide 1 have no characteristic absorption peak in the visible region, which is mainly due to the lack of corresponding chromophore in the molecular structure of pollen polysaccharide, which is also the main reason for the difficulty of rapid qualitative and quantitative detection of polysaccharide. In the UV region, no absorption peak is found at 280 nm and 260 nm, indicating that pollen polysaccharide 1 is a pure polysaccharide and with high purity.

### 2.1.4 Determined IR spectrum Results

Figure 16 shows typical IR of plant polysaccharides. Since plant polysaccharides are macromolecular compounds formed by monosaccharides that are rich in hydroxyl and linked by glucoside bonds, all the pollen polysaccharides have wide and strong absorption peaks at 3400-3500 cm⁻¹. As shown in Figure 16, the absorption band of pollen polysaccharide 1 is the stretching vibrational absorption peak of -OH at 3600-3200 cm⁻¹, and the absorption peak in this region is the characteristic peak of carbohydrate as follows: at 3342 cm⁻¹ it had the stretching vibrational absorption peak of O-H, which is the characteristic peak of carbohydrate; There is an absorption peak at 1641 cm⁻¹, which may be attributed to crystalline water; There is an absorption peak at 1536 cm⁻¹, which may be attributed to N-H variable angular vibration; There are absorption peaks at 1440 cm⁻¹, 1147 cm⁻¹, 1103 cm⁻¹ and 1076 cm⁻¹, which may be attributed to C-O stretching vibration; There are absorption peaks at 1311 cm⁻¹, 1241 cm⁻¹ and 1027 cm⁻¹, which may be attributed to O-H variable angular vibration; There is an absorption peak at 894cm⁻¹, which may be attributed to C-H variable angular vibration of β-end-group epimer of pyranoid ring; There is an absorption peak at 873 cm⁻¹, hich may be attributed to C-H variable angular vibration for equatorial bond other than end-group epimer C-H of pyranoid ring.

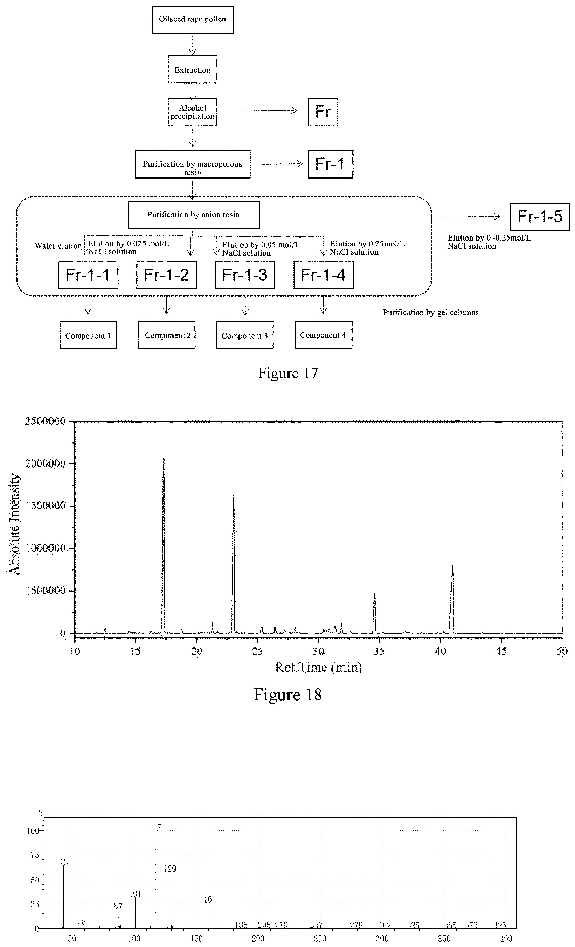

### Refer to Figure 17 for separation process of each component

### 2.2 Construction of Pollen Polysaccharide 2

### 2.2.1 Determined Methylation Results

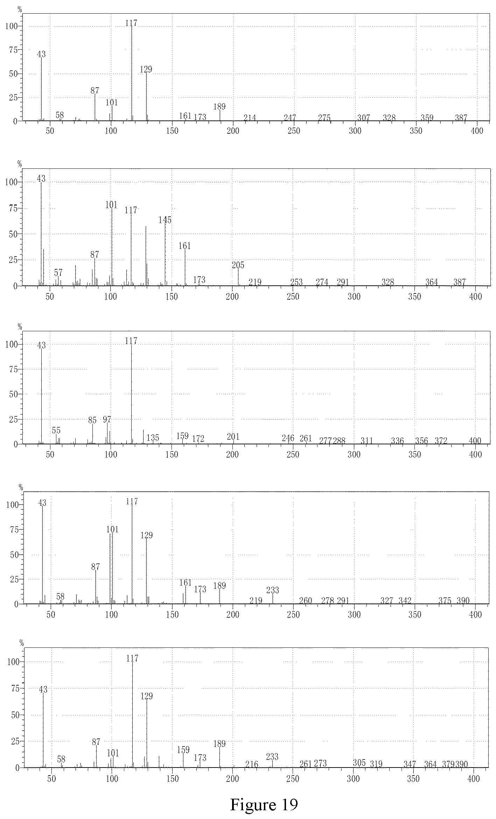

Pollen polysaccharide 2 mainly contains arabinose and galactose, while the content of glucose, xylose, fucose and mannose is too low, only PMAAs of arabinose and galactose are detected by methylation analysis, the PMAAs of glucose, xylose, fucose and mannose are not detected. However, the low content of glucose, xylose, fucose and mannose do not affect the analysis and judgment of the major glycosidic bond forms of pollen polysaccharide 2. Figure 18 shows that the ion current figure detected by GC-MS after methylation, hydrolysis and derivatization of pollen polysaccharide 2, 6 methylated glycosylated ion fragments are selected and collected in the figure. The type of linkage mode for monosaccharide residues is determined by comparing the mass spectrum corresponding to the methylated glycosylation peaks in the figure (Figure 19) with the standard spectrum library (The CCRC Spectral Database for PMAAs https://www.ccrc.uga.edu/specdb/ms/pmaa/pframe.html) and combining the result determined of monosaccharide composition to provide necessary structure information of repeating unit for pollen polysaccharide 2.

**Table 7 The Analysis Results of Methylation for Pollen Polysaccharide 2**

| Retention Time | Product of Methylated Sugar | Major ion fragments (m/z) | Molar ratio | Type of glycosidic bond |
|---|---|---|---|---|
| 17.302 | 2-Me₁-Ara*f* | 43,71,87,101,117,129,145,161 | 0.383 | →3,5)-Ara*f*-(1→ |
| 23.045 | 2,3-Me₂-Ara*f* | 43,71,87,99,101,117,129,161,189 | 0.323 | →5)-Ara*f-*(1→ |
| 26.438 | 2,3,4,6-Me₄-Gal*p* | 43,71,87,101,117,129,145,161,205 | 0.011 | Gal*p*-(1→ |
| 27.237 | 2,3,5-Me₃-Ara*f* | 43,58,85,99,117,127,159,201 | 0.006 | Ara*f*-(1→ |
| 34.616 | 2,3,4-Me₃-Gal*p* | 43,87,99,101,117,129,161,189,233 | 0.091 | →6)-Gal*p*-(1→ |
| 41.001 | 2,4-Me₂-Gal*p* | 43,87,117,129,159,189,233 | 0.186 | →3,6)-Gal*p*-(1→ |

| | | | | |
|---|---|---|---|---|
| **Note: 2,3-Me₂-Ara*f*** is 1,4,5-tri-O-acetyl-2,3-di-*O*-methyl-L-arabinitol and so on. | | | | |

As shown in Table 7, the methylation analysis samples of pollen polysaccharide 2 mainly contain 6 glycyl ion fragments, which are derived from galactose and arabinose respectively. The galactose mainly exists in a linkage mode of →3,6)-Galp-(1→, and the arabinose mainly exists in a linkage mode of →3,5)-Araf-(1→ and→5)-Araf-(1→. According to the glycosidic bond of pollen polysaccharide 2 and the structural characteristics of pollen polysaccharide, we may preliminarily infer that the main chain of pollen polysaccharide 2 may be linked to other glycosidic bond by 1,3,5-Araf and 1,3,6-Galp and linked to other glycosidic bond, and the branch chain is mainly composed of 1,5-Ara*f* and 1,6-Glc*p*.

### 2.2.2 NMR Results of Pollen Polysaccharide 2

**Table 8 ¹H and ¹³C NMR Chemical Shift Attribution of Monosaccharide Residues in Pollen Polysaccharide 2**

| Monosaccharide Residues | (δ, ppm) chemical shift | |
|---|---|---|
| | C1 | H1 |
| T-α-L-Ara*f*-(1→ | 106.31 | 5.18 |
| →5)-α-L-Ara*f*-(1→ | 109.31 | 5.18 |
| →3,5)-α-L-Ara*f*-(1→ | 106.91 | 5.08 |
| →3,6)-*β*-D-Galp-(1→ | 103.25 | 4.41 |
| →6)-*β*-D-Galp-(1→ | 103.15 | 4.46 |
| T-*β*-Gal*p*-(1→ | 99.60 | 4.83 |

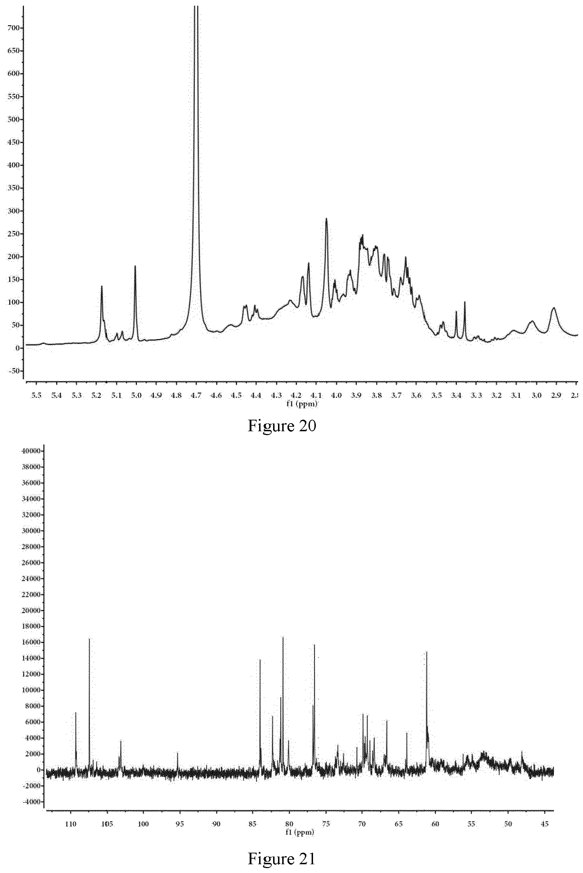

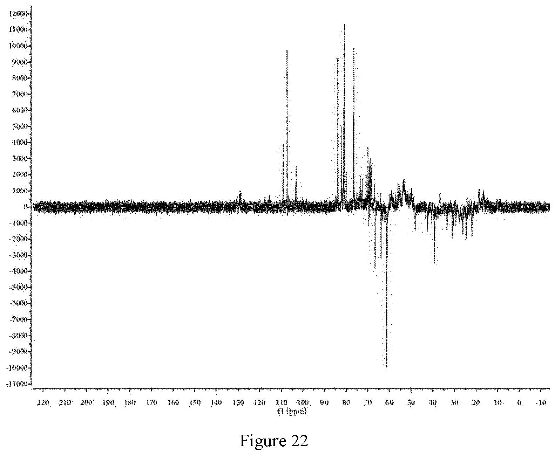

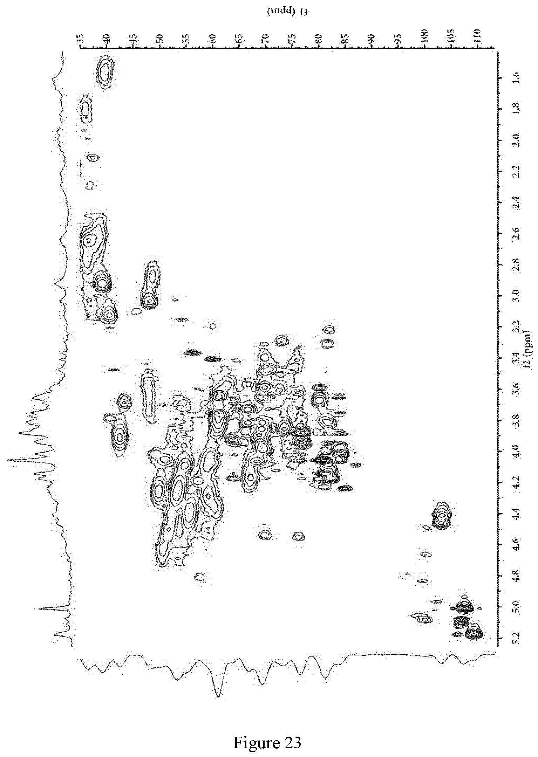

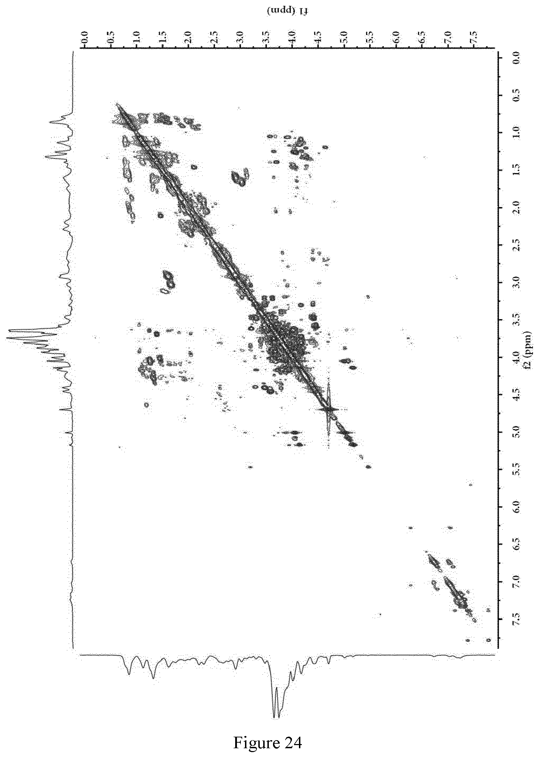

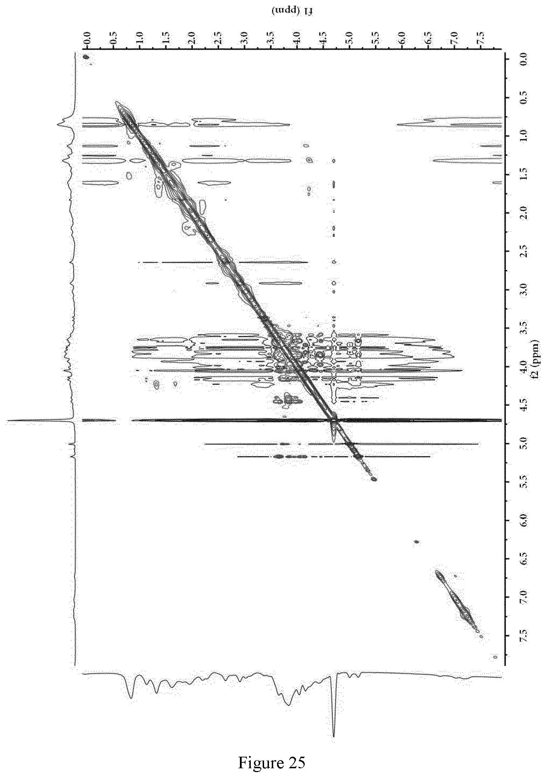

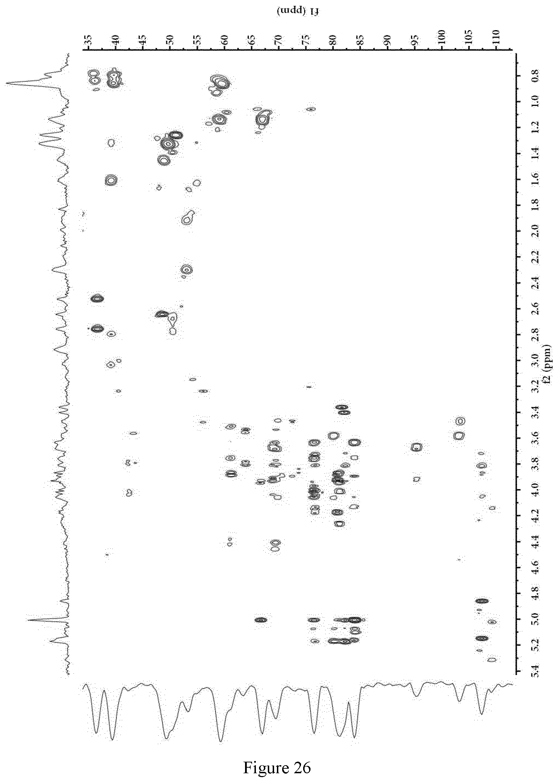

As shown in Figure 20-22 of ¹H-NMR spectrum, ¹³C-NMR spectrum and DEPT-135 spectrum of pollen polysaccharide 2, in the ¹H-NMR spectrum, there are 5 obvious signal peaks in the region related to terminal hydrogen, indicating that there are 5 monosaccharide residues in pollen polysaccharide 2, the corresponding chemical shifts are 5.18 ppm, 5.08 ppm, 4.83 ppm, 4.41 ppm and 4.46 ppm (Table 8), respectively. In the range of 4.30-3.50 ppm, they are the chemical shift of carbon No. 2 corresponding to 5 residues to carbon No. 6 corresponding to hydrogen. The chemical shift of terminal hydrogen corresponding to terminal carbon may be determined by HSQC spectrum and ¹³C-NMR spectrum. HSQC (Figure 23), COSY (Figure 24) and TOCSY (Figure 25) are two-dimensional spectrum of carbon and hydrogen attribution on the same monosaccharide residue, as well as related o-hydrogen and total hydrogen, other carbons and hydrogens in related monosaccharides residues may be attributed by the analysis. The spatial correlation of carbon and hydrogen may be determined by HMBC spectrum (Figure 26), and then the linkage order of monosaccharide glycoside bonds may be determined.

According to methylation analysis and related NMR analysis, the main chain of pollen polysaccharide 2 is determined to be linked by arabinose via α-L-1,3,5-Araf and galactose via β-D-1,3,6-Galp, and the branch chain groups are linked by arabinose at No.5 site and galactose at No.6 site, the branch chain group linked are mainly composed of α-L-1,5-Araf and *β*-D-1,6-Gal, the main repeating structure unit of pollen polysaccharide 2 is as follow: 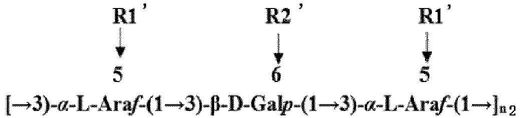
Where R1' is T-α-L-Ara*f*-(1→5)-α-L-Ara*f*-(1→
R2' is T-β-D-Gal*p*-(1→6)-β-D-Gal*p*-(1→

### 2.2.3 Determined UV spectrum Results

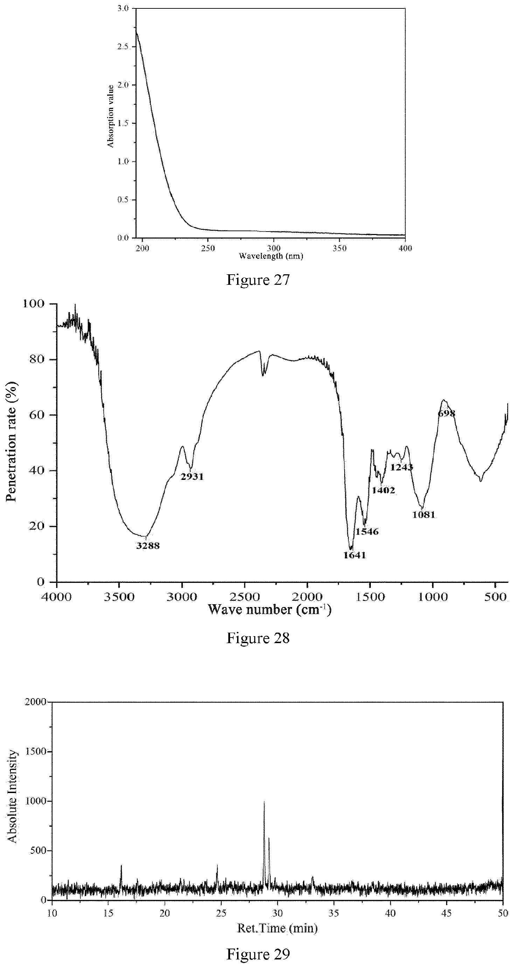

As shown in Figure 27, the pollen polysaccharide 2 has no characteristic absorption peak in the visible region. In the UV region, no absorption peak is found at 280 nm and 260 nm, indicating that pollen polysaccharide 2 is a pure polysaccharide and with high purity.

### 2.2.4 Determined IR spectrum Results

As shown in Figure 28, the absorption band of pollen polysaccharide 2 is the stretching vibrational absorption peak of -OH at 3600-3200 cm⁻¹, and the absorption peak in this region is the characteristic peak of carbohydrate as follows: at 3288 m⁻¹ it has the stretching vibrational absorption peak of O-H, which is the characteristic peak of carbohydrate; There are absorption peaks at 2931 cm⁻¹ and 2871 cm⁻¹ , which may be attributed to C-H stretching vibration; There is an absorption peak at 1641 m⁻¹, which may be attributed to crystal water; There is an absorption peak at 1548 cm⁻¹, which may be attributed to C=O stretching vibration; There are absorption peaks at 1440 cm⁻¹ and 1402 cm⁻¹, which may be attributed to C-O stretching vibration; There are absorption peaks at 1309 cm⁻¹, 1243 cm⁻¹ and 1081 cm⁻¹, which may be attributed to O-H variable angular vibration; There is an absorption peak at 896 cm⁻¹, which may be attributed to C-H variable angular vibration of β-end-group epimer of pyranoid ring.

### 2.3 Construction of Pollen Polysaccharide 3

### 2.3.1 Determined Methylation Results

In order to investigate the primary structure of pollen polysaccharide 3, the improved Needs method is used to methylate the pollen polysaccharide 3.

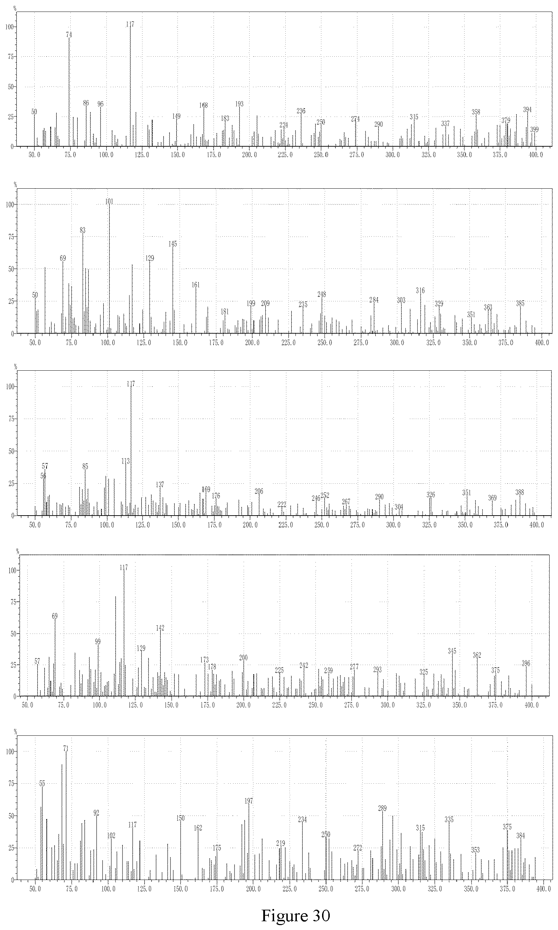

The fully methylated pollen polysaccharide 3 is treated by hydrolysis, reduction and derivatization and reformed to partially methylated PMAAs, the total ion current figure (Figure 29) of methylation analysis for pollen polysaccharide 3 may be obtained by GC-MS analysis. The type of partially methylated glycosyl is determined by comparing the mass spectrum (Figure 30) of methylated glycosyl peak with the standard spectrum library (The CCRC Spectral Database for PMAA's https://www.ccrc.uga.edu/specdb/ms/pmaa/pframe.html), meanwhile, the molar ratio is calculated based on the peak area of chromatographic peak, necessary structure information of repeating unit for pollen polysaccharide 3 is provided by combining the peak area and the result determined of monosaccharide composition.

**Table 9 The Analysis Results of Methylation for Pollen Polysaccharide 3**

| Retention Time | Product of Methylated Sugar | Major ion fragments (m/z) | Molar ratio | Type of glycosidic bond |
|---|---|---|---|---|
| 16.157 | 2-Me₁-Ara*f* | 43,71,87,101,117,129,145,161 | 0.122 | →3,5)-Ara*f*-(1→ |
| 24.651 | 2,3-Me₂-Ara*f* | 43,71,87,101,117,129,145,161,205 | 0.137 | →5)-Ara*f-*(1→ |
| 28.807 | 2,4-Me₂-Gal*p* | 43,87,99,101,113,117,129,131,161,173,2 33 | 0.377 | →3,6)-Gal*p*-(1→ |
| 29.235 | 2,3,4-Me₃-Gal*p* | 43,87,99,101,113,117,129,131,161,173,2 33 | 0.233 | →3)-Gal*p*-(1→ |
| 33.108 | 2,3,4,6-Me₄-Gal*p* | 43,87,97,117,159,185,234 | 0.131 | Gal*p*-(1→ |

### 2,3-Me₂-Araf is 1,4,5-tri-O-acetyl-2,3-di-O-methyl-L-arabinitol and so on.

Pollen polysaccharide 3 mainly contains arabinose and galactose, while the content of rhamnose, glucose, xylose, fucose and mannose is too low, only PMAAs of arabinose and galactose are detected by methylation analysis, while the PMAAs of rhamnose, glucose, xylose, fucose and mannose are not detected. However, the low content of rhamnose, glucose, xylose, fucose and mannose do not affect the analysis and judgment of the major glycosidic bond forms of pollen polysaccharide 3. In the total ion current figure obtained by GC-MS, five methylated glycosylated ion fragments are mainly screened and collected from Figure 30.

As shown in Table 9, the methylation analysis samples of pollen polysaccharide 3 mainly contain 5 glycyl ion fragments, which are derived from galactose and arabinose respectively. The galactose mainly existsed in linkage modes of →3,6)-Gal*p*-(1→ and →3)-Gal*p*-(1→, and the arabinose mainly exists in linkage modes of →3,5)-Ara*f*-(1→ and →5)-Ara*f*-(1→. According to the glycosidic bond of pollen polysaccharide 3 and the structural characteristics of pollen polysaccharide, we may preliminarily infer that the main chain of pollen polysaccharide 3 may be linked to other glycosidic bond by →3,6)-Gal*p*-(1→ and →3)-Gal*p*-(1→ and linked to other glycosidic bond, and the branch chain is mainly composed of →3,5)-Ara*f*-(1→ and →5)-Ara*f*-(1→.

### 2.3.2 NMR Results of Pollen Polysaccharide 3

**Table 10 ¹H and ¹³C NMR Chemical Shift Attribution of Monosaccharide Residues in Pollen Polysaccharide 3**

| Monosaccharide Residues | (δ, ppm) chemical shift | |
|---|---|---|
| | C1 | H1 |
| T-α-L-Ara*f*-(1→ | 106.37 | 5.15 |
| →5)-α-L-Ara*f*-(1→ | 109.27 | 5.17 |
| →3,5)-α-L-Ara*f*-(1→ | 106.86 | 5.09 |
| →3,6)-*β*-D-Gal*p*-(1→ | 103.11 | 4.40 |
| →6)-*β*-D-Gal*p*-(1→ | 103.80 | 4.58 |
| T-*β*-Gal*p*-(1→ | 98.98 | 4.83 |

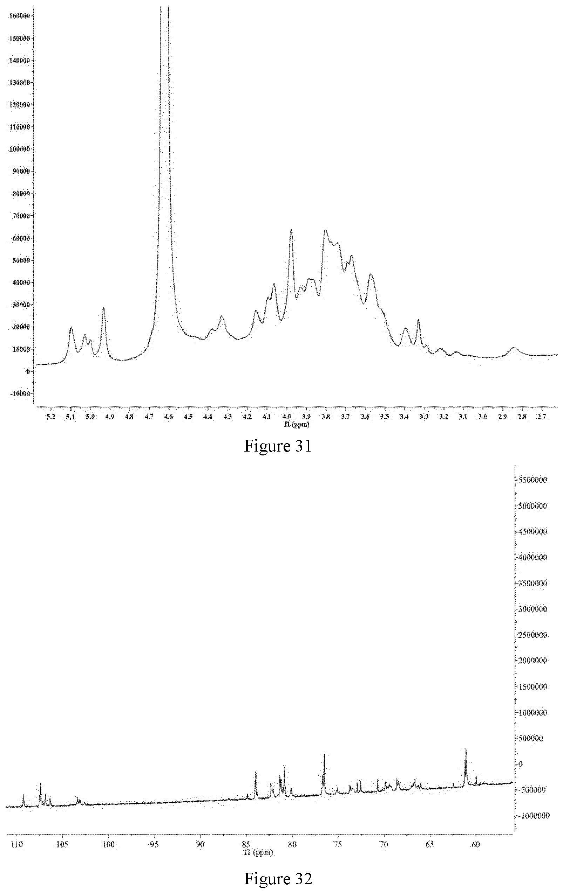

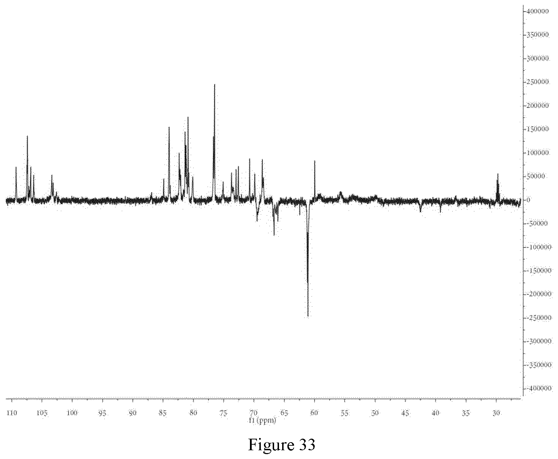

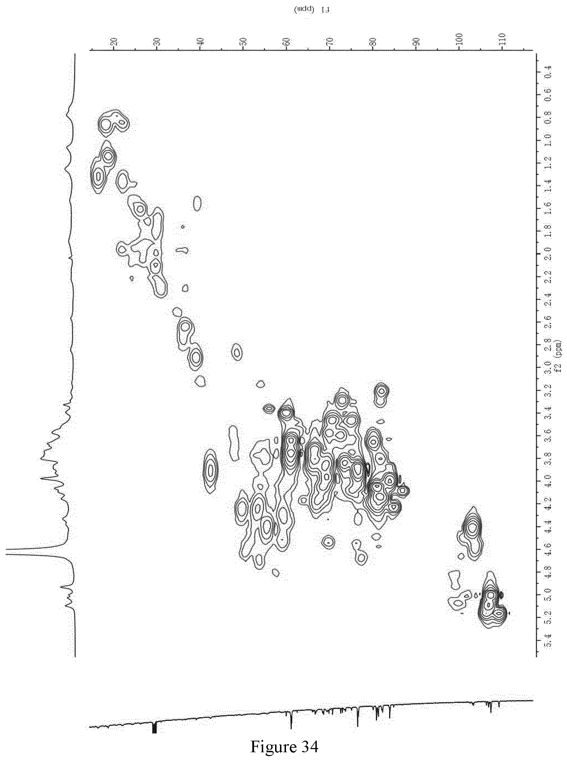

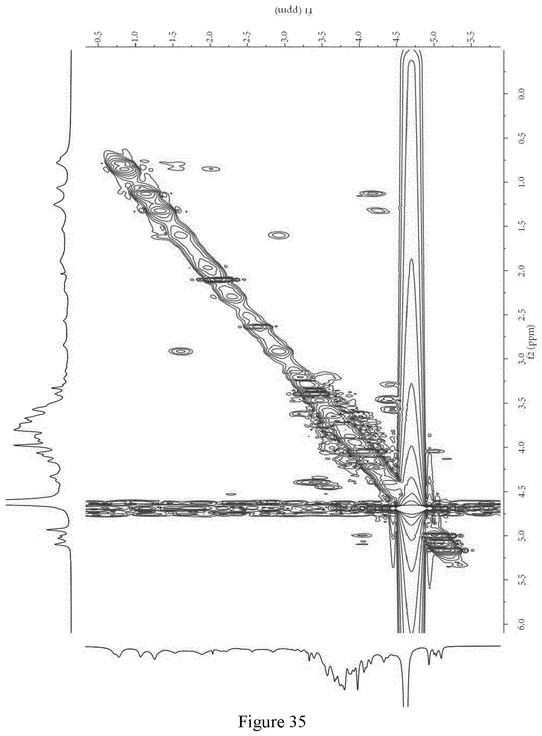

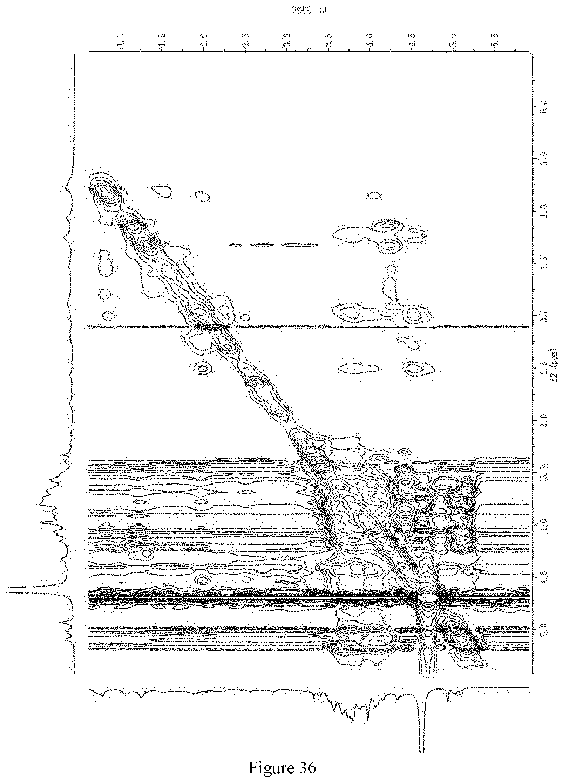

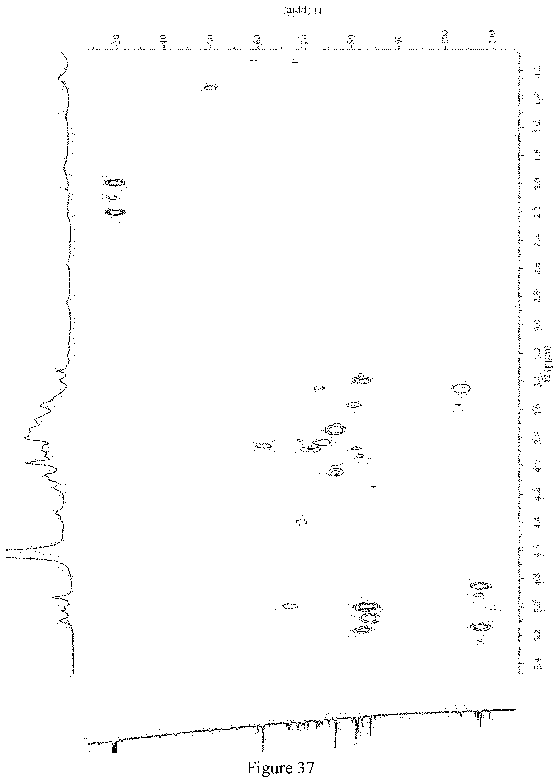

As shown in Figure 31, 32 and 33 of ¹H-NMR spectrum, ¹³C-NMR spectrum and DEPT-135 spectrum of pollen polysaccharide 3, there are 6 obvious signal peaks in the region related to terminal hydrogen, indicating that there are 6 monosaccharide residues in pollen polysaccharide 3, the correspongding chemical shifts are 5.17 ppm, 5.15 ppm, 5.09 ppm, 4.83 ppm, 4.58 ppm and 4.40 ppm respectively. In the range of 4.30-3.50 ppm, they are the chemical shift of carbon No. 2 corresponding to 6 residues to carbon No. 6 corresponding to hydrogen. The chemical shift of terminal hydrogen corresponding to terminal carbon may be determined by HSQC spectrum and ¹³C-NMR spectrum. HSQC (Figure 34), COSY (Figure 35) and NOSEY (Figure 36) are two-dimensional spectrum of carbon and hydrogen attribution on the same monosaccharide residue, as well as related o-hydrogen and total hydrogen, other carbons and hydrogens in related monosaccharides residues may be attributed by the analysis. The spatial correlation of carbon and hydrogen may be determined by HMBC spectrum (Figure 37), and then the linkage order of monosaccharide glycoside bonds may be determined.

According to methylation analysis and related NMR analysis, we may determine that the main chain of pollen polysaccharide 3 is composed of galactose by linking *β*-D-1,3,6-Gal*p* and β-D-1,3-Gal*p*, the branch chain linked of branch chain group is mainly composed of *α*-L-1,3,5-Ara*f* and *α*-L-1,5-Ara*f*, the main repeating structure unit of pollen polysaccharide 3 is as follow:

| | |
|---|---|
| Main Chain | 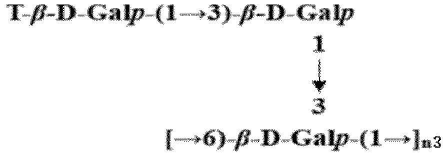 |
| Branch Chain | 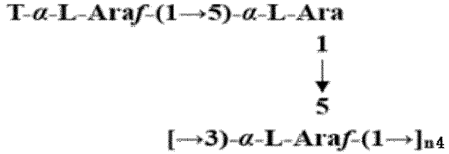 |

### 2.3.3 Determined UV spectrum Results

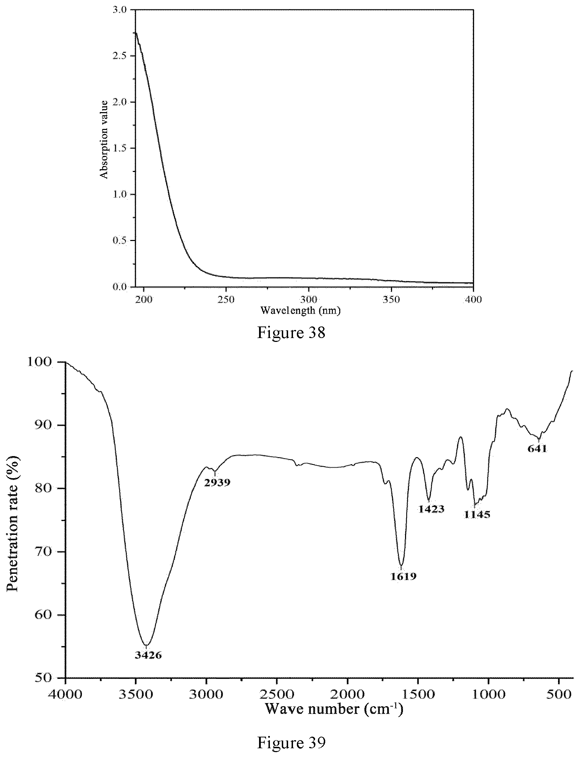

As shown in Figure 38, the pollen polysaccharide 3 has no characteristic absorption peak in the visible region. In the UV region, no absorption peak is found at 280 nm and 260 nm, indicating that pollen polysaccharide 3 is a pure polysaccharide and with high purity.

### 2.3.4 Determined IR spectrum Results

Figure 39 shows typical IR of plant polysaccharides, the absorption band of pollen polysaccharide 3 is the stretching vibrational absorption peak of -OH at 3600-3200 cm⁻¹, and the absorption peak in this region is the characteristic peak of carbohydrate as follows: at 3426 cm⁻¹ it had the stretching vibrational absorption peak of O-H, which is the characteristic peak of carbohydrate; There are an absorption peak at 2939 cm⁻¹, which may be attributed to C-H stretching vibration; There is an weaker absorption peak near 1734cm⁻¹, which may be attributed to C=O stretching vibration of carboxyl, indicating that pollen polysaccharide 3 contains a certain amount of uronic acid; There is an absorption peak at 1619 cm⁻¹, which may be attributed to crystal water; There are absorption peaks at 1423 cm⁻¹, 1145 cm⁻¹ and 1091 cm⁻¹, which may be attributed to C-O stretching vibration; There is an absorption peak at 895 cm⁻¹, which may be attributed to C-H variable angular vibration of β-end-group epimer of pyranoid ring.

### 2.4 Construction of Pollen Polysaccharide 4

### 2.4.1 Determined Methylation Results

In order to investigate the primary structure of pollen polysaccharide 4, the improved Needs method is used to methylate the pollen polysaccharide 4.

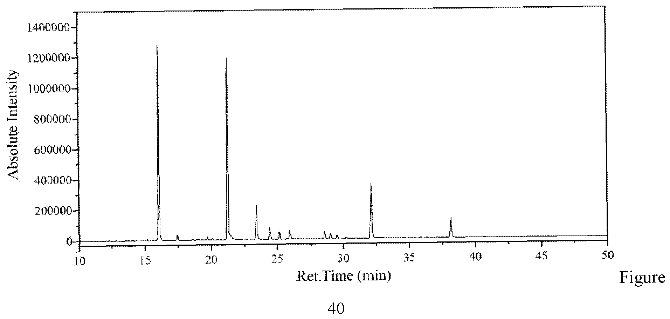

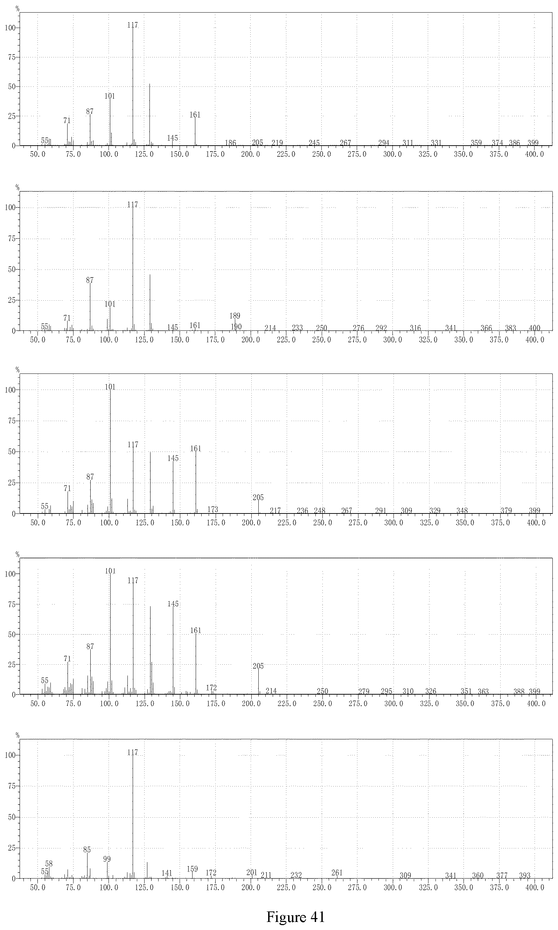

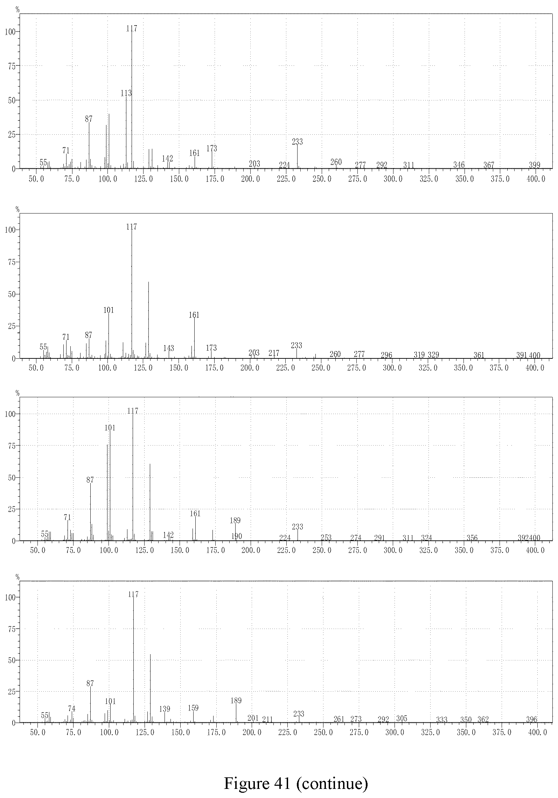

The fully methylated pollen polysaccharide 4 is treated by hydrolysis, reduction and derivatization and reformed to partially methylated PMAAs, the total ion current figure (Figure 40) of methylation analysis for pollen polysaccharide 4 may be obtained by GC-MS analysis. The type of partially methylated glycosyl is determined by comparing the mass spectrum (Figure 41) of methylated glycosyl peak with the standard spectrum library (The CCRC Spectral Database for PMAA's https://www.ccrc.uga.edu/specdb/ms/pmaa/pframe.html), meanwhile, the molar ratio is calculated based on the peak area of chromatographic peak, necessary structure information of repeating unit for pollen polysaccharide 4 is provided by combining the peak area and the result determined of monosaccharide composition.

**Table 11 The Analysis Results of Methylation for Pollen Polysaccharide 4**

| Retention Time | Product of Methylated Sugar | Major ion fragments (m/z) | Molar ratio | Type of glycosidic bond |
|---|---|---|---|---|
| 16.053 | 2-Me₁-Ara*f* | 43,71,87,101,117,129,145,161 | 0.343 | →3,5)-Ara*f*-(1→ |
| 21.278 | 2,3-Me₂-Ara*f* | 43,71,87,99,101,117,129,161,189 | 0.349 | →5)-Ara*f*-(1→ |
| 23.418 | 2,3,4,6-Me₄-Glc*p* | 43,71,87,101,117,129,145,161,205 | 0.061 | Glc*p*-(1→ |
| 24.443 | 2,3,4,6-Me₄-Gal*p* | 43,71,87,101,117,129,145,161,205 | 0.021 | Gal*p*-(1→ |
| 25.176 | 2,3,5-Me₃-Ara*f* | 43,58,85,99,117,127,159,201 | 0.013 | Ara*f*-(1→ |
| 28.578 | 2,3,6-Me₃-Gal*p* | 43,87,99,101,113,117,129,131,161,173,2 33 | 0.013 | →4)-Gal*p*-(1→ |
| 29.531 | 2,4,6-Me₃-Galp | 43,87,99,101,117,129,161,173,233 | 0.007 | →3)-Gal*p*-(1→ |
| 32.133 | 2,3,4-Me₃-Gal*p* | 43,87,99,101,117,129,161,189,233 | 0.116 | →6)-Gal*p*-(1→ |
| 38.143 | 2,4-Me₂-Gal*p* | 43,87,117,129,159,189,233 | 0.038 | →3,6)-Gal*p*-(1→ |

### 2,3-Me₂-Araf is 1,4,5-tri-O-acetyl-2,3-di-O-methyl-L-arabinitol and so on.

Pollen polysaccharide 4 mainly contains arabinose and galactose, while the content of glucose, xylose, fucose and mannose is too low, only PMAAs of arabinose and galactose are detected by methylation analysis, while the PMAAs of xylose, fucose and mannose are not detected. However, the low content of glucose, xylose, fucose and mannose do not affect the analysis and judgment of the major glycosidic bond forms of pollen polysaccharide 4. Figure 40 shows the total ion flow figure obtained by GC-MS after methylation, hydrolysis and derivatization of pollen polysaccharide 4. Nine methylation-derived glycosylated ion fragments are mainly screened and collected from Figure 41.

As shown in Table 11, the methylation analysis samples of pollen polysaccharide 4 mainly contains 9 glycyl ion fragments, which are derived from galactose, arabinose and glucose, respectively. The galactose mainly exists in a linkage mode of →6)-Galp-(1→, and the arabinose mainly exists in a linkage mode of →3,5)-Araf-(1→ and →5)-Araf-(1→. According to the glycosidic bond of pollen polysaccharide 4 and the structural characteristics of pollen polysaccharide, we may preliminarily infer that the main chain of pollen polysaccharide 4 may be linked to other glycosidic bond by 1,3,5-Ara*f* and 1, 6-Gal*p* and linked to other glycosidic bond, and the branch chain is mainly composed of 1,5-Ara*f*, →3,6)-Gal*p*-(1→ and 1,3-Gal*p*.

### 2.4.2 NMR Results of Pollen Polysaccharide 4

**Table 12 ¹H and ¹³C NMR Chemical Shift Attribution of Monosaccharide Residues in Pollen Polysaccharide 4**

| Monosaccharide Residues | (δ, ppm) chemical shift | |
|---|---|---|
| | C1 | H1 |
| T-α-L-Ara*f*-(1→ | 108.16 | 5.38 |
| →5)-α-L-Ara*f*-(1→ | 109.25 | 5.31 |
| →3,5)-α-L-Ara*f*-(1→ | 107.47 | 5.14 |
| →3,6)-*β*-D-Gal*p*-(1→ | 103.34 | 4.41 |
| →6)-*β*-D-Galp-(1→ | 103.19 | 4.57 |
| →3)-*β*-D-Gal*p*-(1→ | 101.28 | 4.52 |
| T-*β*-Gal*p*-(1→ | 102.63 | 4.79 |

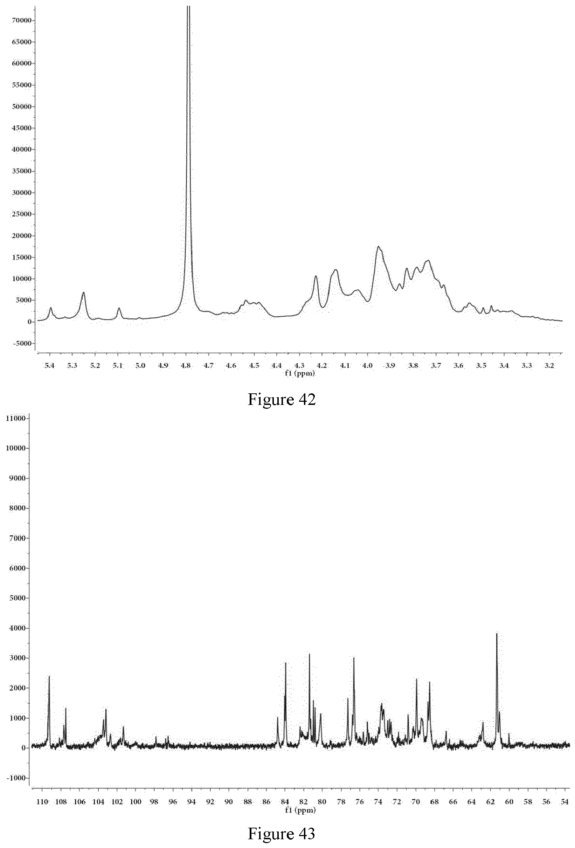

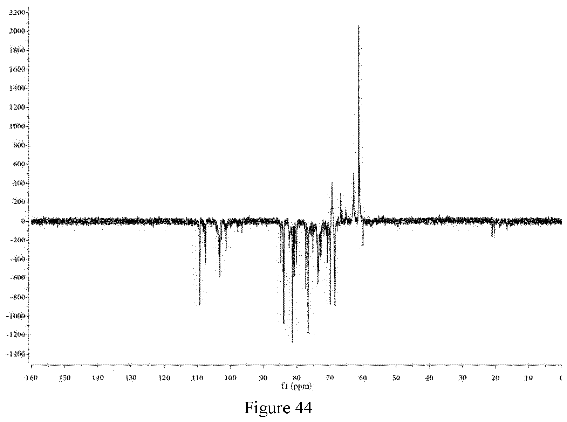

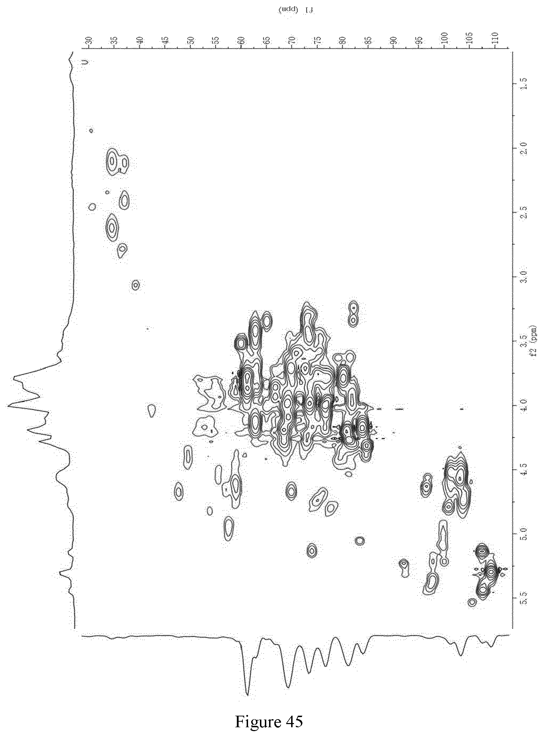

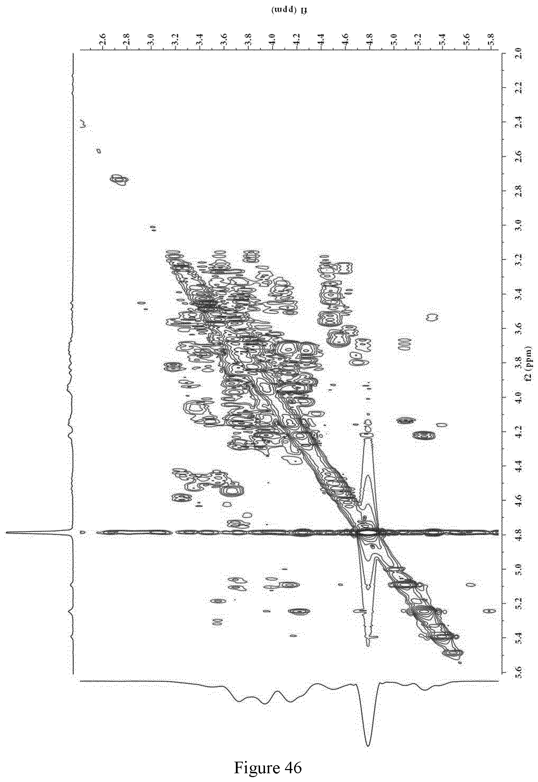

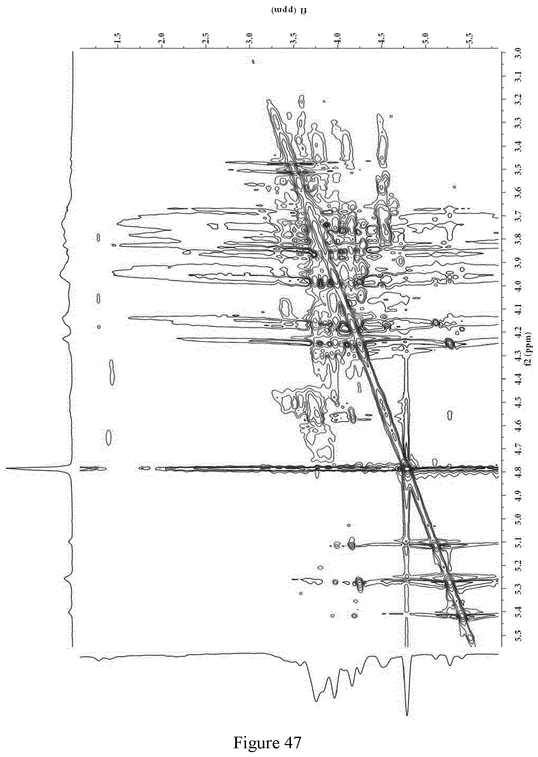

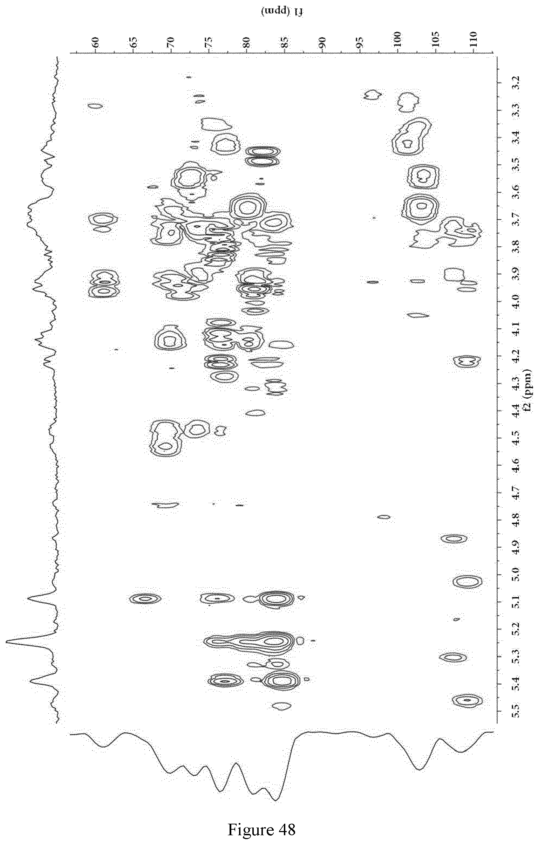

As shown in Figure 42, 43, 44 of ¹H-NMR spectrum, ¹³C-NMR spectrum and DEPT-135 spectrum of pollen polysaccharide 4, in the ¹H-NMR spectrum, there are 7 obvious signal peaks in the region related to terminal hydrogen, indicating that there are 7 monosaccharide residues in pollen polysaccharide 4 (Table 12), the correspongding chemical shifts are 5.31 ppm, 5.14 ppm, 5.09 ppm, 4.79 ppm, 4.63 ppm, 4.57 ppm and 4.52 ppm, respectively. In the range of 4.30-3.50 ppm, they are the chemical shift of carbon No. 2 corresponding to 7 residues to carbon No. 6 corresponding to hydrogen. The chemical shift of terminal hydrogen corresponding to terminal carbon may be determined by HSQC spectrum (Figure 45) and 13C-NMR spectrum. HSQC, COSY (Figure 46) and TOCSY (Figure 47) are two-dimensional spectrum of carbon and hydrogen attribution on the same monosaccharide residue, as well as related o-hydrogen and total hydrogen, other carbons and hydrogens in related monosaccharides residues may be attributed by the analysis. The spatial correlation of carbon and hydrogen may be determined by HMBC spectrum (Figure 48), and then the linkage order of monosaccharide glycoside bonds may be determined.

According to methylation analysis and related NMR analysis, the main chain of pollen polysaccharide 4 is determined to be linked by arabinose via α-L-1,3,5-Ara*f* and galactose via *β*-D-1,3)-Gal*p*, and the branch chain groups are linked by arabinose at No.5 site and arabinose at No.3 site, the branch chain group linked are mainly composed of T-α-L-Ara*f*-(1→5)-α-L-Ara*f*-(1, in addition, there is another branch chain →3) -β-d-Galp -(1→6) -β-d-Galp -(1→ structure, the main repeating structure unit of pollen polysaccharide 4 is as follow:
Where,

| | |
|---|---|
| Main Chain | 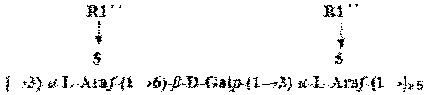 |
| Branch Chain | **→3)-*β*-D-Gal*p*-(1→6)-*β*-D-Gal*p*-(1→** |

R1" is T-α-L-Ara*f-*(1→5)-α-L-Ara*f-*(1→.

### 2.4.3 Determined UV spectrum Results

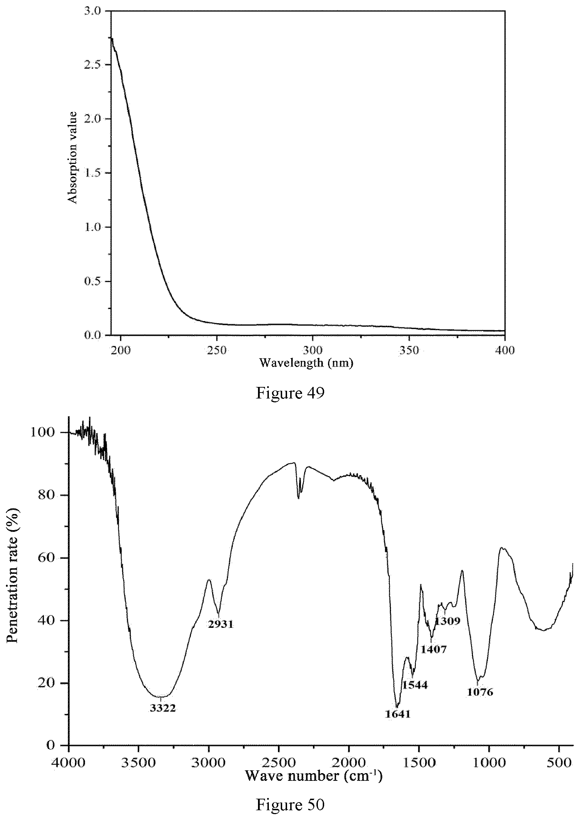

As shown in Figure 49, the pollen polysaccharide 4 has no characteristic absorption peak in the visible region. In the UV region, no absorption peak is found at 280 nm and 260 nm, indicating that pollen polysaccharide 4 is a pure polysaccharide and with high purity.

### 2.4.4 Determined IR spectrum Results

Figure 50 shows typical IR spectra of plant polysaccharides, and the IR result of pollen polysaccharide 4. The absorption band of is the stretching vibrational absorption peak of -OH at 3600-3200 cm⁻¹, and the absorption peak in this region is the characteristic peak of carbohydrate as follows: at 3322 m⁻¹ it has the stretching vibrational absorption peak of O-H, which is the characteristic peak of carbohydrate; There are absorption peaks at 2931 cm⁻¹ and 2875 cm⁻¹ , which may be attributed to C-H stretching vibration; There is an absorption peak at 1641 m⁻¹, which may be attributed to crystal water; There is an absorption peak at 1544 cm⁻¹, which may be attributed to C=O stretching vibration; There are an absorption peak at 1407 cm⁻¹, which may be attributed to C-O stretching vibration; There are absorption peaks at 1309 cm⁻¹, 1241 cm⁻¹, 1076 cm⁻¹ and 1047 cm⁻¹, which may be attributed to O-H variable angular vibration; There is an absorption peak at 894 cm⁻¹, which may be attributed to C-H variable angular vibration of β-end-group epimer of pyranoid ring.

### Embodiment 7: Promotion of Tobacco Growth

### Experiment Sample:

Active moiety Fr of pollen polysaccharide, active moiety Fr-1 of pollen polysaccharide, active moiety Fr 1-5 of pollen polysaccharide, pollen polysaccharide 1-4, all the above samples are prepared with pure water into mother liquor with polysaccharide concentration of 10 mg/ml and diluted with water according to the experiment design.

### 1, Experiment Design:

**Table 13: Design of Agent Concentration**

| No. | Sample Name | Agent Concentration (ppm) |
|---|---|---|
| 1 | Active moiety Fr of pollen polysaccharide | 0.03 |
| 2 | | 0.3 |
| 3 | | 3 |
| 4 | | 30 |
| 5 | Active moiety Fr of pollen polysaccharide-1 | 0.03 |
| 6 | | 0.3 |
| 7 | | 3 |
| 8 | | 30 |
| 9 | Active moiety Fr of pollen polysaccharide-1-5 | 0.03 |
| 10 | | 0.3 |
| 11 | | 3 |
| 12 | | 30 |
| 13 | Pollen polysaccharide 1 | 0.03 |
| 14 | | 0.3 |
| 15 | | 3 |
| 16 | | 30 |
| 17 | Pollen polysaccharide 2 | 0.03 |
| 18 | | 0.3 |
| 19 | | 3 |
| 20 | | 30 |
| 21 | Pollen polysaccharide 3 | 0.03 |
| 22 | | 0.3 |
| 23 | | 3 |
| 24 | | 30 |
| 25 | Pollen polysaccharide 4 | 0.03 |
| 26 | | 0.3 |
| 27 | | 3 |
| 28 | | 30 |
| 29 | Pure water | -- |

### 2. Experiment method:

After the agent is prepared according to the above table, the tobacco seedling leaves are sprayed evenly, each treatment is repeated for 6 times, with 1 plant per replicate. It is appropriate that the liquid do not drop to prevent the agent from entering the soil and affecting the experiment results, the incubation period is set as follows: temperature 28°C, light 2000 lux, 14 h/10 h (day/night), humidity 65%. Plant phenotypic analysis system is used to record the RGB AREA_MM parameter values (leaf area /mm2) of tobacco 7 days before and 7 days after the treatment, respectively, the growth rate of leaf area is calculated to evaluate the growth promoting effect of each agent. The formula for calculating the growth rate of leaf area is as follows:
Growth rate of leaf area (%) = (final leaf area - initial leaf area) × 100% / initial leaf area

### 3. Experiment result:

The growth rate of leaf area of different treatment groups at 7 days after treatment is shown in the table below. From the experiment results, we can see that each pollen polysaccharide treatment group has the growth promotion effect in the concentration range of 0.03-30 ppm, the optimal growth-promoting concentrations of active moiety Fr of pollen polysaccharide, active moiety Fr-1 of pollen polysaccharide and active moiety Fr 1-5 of pollen polysaccharide are 3ppm. However, the growth promoting effect is active moiety FR1-5 > active moiety FR-1 > active moiety Fr.

The best growth promoting concentration of pollen polysaccharide 1 is 0.3 ppm; The best growth promoting concentration of pollen polysaccharide 2 is 3 ppm. The best growth promoting concentration of pollen polysaccharide 3 is 0.3 ppm. The optimal growth promoting concentration of pollen polysaccharide 4 is 0.03 ppm. The growth promoting effect of the above polysaccharides is better than the active moiety Fr, active moiety FR-1 and active moiety FR1-5 of pollen polysaccharide at the same concentration, pollen polysaccharide 4 had the best effect, which may provide the best growth promotion effect at very low concentration.

**Table 14 Results of Tobacco Growth Promotion in Different Treatment Groups**

| Sample Name | Agent Concentration (ppm) | Growth rate of leaf area for 7 days (%) |
|---|---|---|
| Active moiety Fr of pollen polysaccharide | 0.03 | 475.78 |
| | 0.3 | 488.21 |
| | 3 | 516.92 |
| | 30 | 469.25 |
| Active moiety Fr of pollen polysaccharide-1 | 0.03 | 487.02 |
| | 0.3 | 492.18 |
| | 3 | 567.72 |
| | 30 | 512.07 |
| Active moiety Fr of pollen polysaccharide-1-5 | 0.03 | 500.21 |
| | 0.3 | 579.92 |
| | 3 | 600.51 |
| | 30 | 586.29 |
| Pollen polysaccharide 1 | 0.03 | 529.97 |
| | 0.3 | 623.82 |
| | 3 | 574.60 |
| | 30 | 523.09 |
| Pollen polysaccharide 2 | 0.03 | 477.89 |
| | 0.3 | 543.42 |
| | 3 | 648.01 |
| | 30 | 594.74 |
| Pollen polysaccharide 3 | 0.03 | 603.17 |
| | 0.3 | 643.43 |
| | 3 | 572.24 |
| | 30 | 582.09 |
| Pollen polysaccharide 4 | 0.03 | 675.05 |
| | 0.3 | 619.17 |
| | 3 | 571.8 |
| | 30 | 578.37 |
| Pure water | --- | 471.07 |

### Embodiment 8: Promotion of Pakchoi Growth

### 1. Experiment Sample:

Active moiety Fr of pollen polysaccharide, active moiety Fr-1 of pollen polysaccharide, active moiety Fr 1-5 of pollen polysaccharide, pollen polysaccharide 1-4, all the above samples are prepared with pure water into mother liquor with polysaccharide concentration of 10 mg/ml and diluted with water according to the experiment design.

### 2. Experiment Design: Refer to Table 13.

### 3. Experiment method:

Pakchoi seedlings (3-4 leaves) with the same growth level are selected. After the treatment agent is prepared according to the above table, the pakchoi seedlings are given root irrigation treatment, each treatment is repeated for 6 times, each replicate for 1 plant, and the dosage of each plant is 80ml. The seedlings are placed in a plant culture room at 25°C, light intensity is set at 3000 lux, 14 h/10 h (day/night), humidity is 65%, and water and fertilizer management level is consistent during culture. Leaf length, leaf width, aboveground fresh weight and SPAD values are determined for 7 days after treatment.

### 4. Experiment result:

The result determined of different treatment groups at 7 days after treatment is shown in the table below. From the experiment results, we can see that each pollen polysaccharide treatment group has the growth promotion effect for pakchoi in the concentration range of 0.03-30 ppm, the optimal growth-promoting concentrations of active moiety Fr, active moiety Fr-1 and active moiety Fr 1-5 are 3 ppm. However, the growth promoting effect is active moiety FR1-5 > active moiety FR-1 and active moiety Fr.

The best growth promoting concentration of pollen polysaccharide 1 is 0.3 ppm; The best growth promoting concentration of pollen polysaccharide 2 is 3 ppm. The best growth promoting concentration of pollen polysaccharide 3 is 0.3 ppm. The optimal growth promoting concentration of pollen polysaccharide 4 is 0.03 ppm. The growth promoting effect is better than the active moiety Fr, active moiety FR-1 and active moiety FR1-5 of pollen polysaccharide, pollen polysaccharide 4 may provide the best growth promotion effect at very low concentration.

**Table 15 Results of Pakchoi Growth Promotion in Different Groups for 7 Days After Treatment**

| Sample Name | Agent Concentration (ppm) | Leaf length (cm) | Leaf width (cm) | Fresh weight (g) |
|---|---|---|---|---|
| Active moiety Fr of pollen polysaccharide | 0.03 | 9.85 | 4.80 | 3.86 |
| | 0.3 | 9.91 | 4.91 | 3.98 |
| | 3 | 10.37 | 5.28 | 4.13 |
| | 30 | 10.20 | 5.01 | 4.00 |
| Active moiety Fr of pollen polysaccharide-1 | 0.03 | 9.80 | 4.81 | 3.84 |
| | 0.3 | 10.02 | 5.42 | 3.92 |
| | 3 | 10.89 | 5.63 | 4.36 |
| | 30 | 10.47 | 5.03 | 4.05 |
| Active moiety Fr of pollen polysaccharide-1-5 | 0.03 | 9.98 | 4.89 | 4.02 |
| | 0.3 | 10.76 | 5.48 | 4.30 |
| | 3 | 11.29 | 5.87 | 4.95 |
| | 30 | 10.70 | 5.43 | 4.33 |
| Pollen polysaccharide 1 | 0.03 | 10.26 | 4.84 | 4.81 |
| | 0.3 | 12.58 | 5.97 | 5.55 |
| | 3 | 11.47 | 5.59 | 5.20 |
| | 30 | 10.21 | 5.40 | 5.04 |
| Pollen polysaccharide 2 | 0.03 | 10.55 | 5.50 | 3.97 |
| | 0.3 | 11.04 | 5.58 | 5.39 |
| | 3 | 12.38 | 6.11 | 5.72 |
| | 30 | 10.82 | 5.82 | 5.15 |
| Pollen polysaccharide 3 | 0.03 | 11.94 | 5.14 | 4.83 |
| | 0.3 | 12.59 | 6.02 | 5.82 |
| | 3 | 11.38 | 5.45 | 5.30 |
| | 30 | 11.03 | 4.98 | 5.20 |
| Pollen polysaccharide 4 | 0.03 | 12.97 | 6.15 | 6.10 |
| | 0.3 | 11.01 | 6.02 | 5.83 |
| | 3 | 10.76 | 5.60 | 5.42 |
| | 30 | 10.00 | 5.01 | 5.21 |
| Pure water | --- | 9.75 | 4.77 | 3.81 |

### Embodiment 9: Low temperature resistance

### 1. Experiment Sample:

Active moiety Fr of pollen polysaccharide, active moiety Fr-1 of pollen polysaccharide, active moiety Fr 1-5 of pollen polysaccharide, pollen polysaccharide 1-4, all the above samples are prepared with pure water into mother liquor with polysaccharide concentration of 10 mg/ml and diluted with water according to the experiment design.

### 2. Experiment Design: Refer to Table 13.

### 3. Experiment method:

After the agent is prepared according to the above table, the tobacco seedling leaves are sprayed evenly, each treatment is repeated for 6 times, with 1 plant per replicate. It is appropriate that the liquid do not drop to prevent the agent from entering the soil and affecting the experiment results, the seedlings are treated with cold damage (4°C) for 24 h after survival for 1 day and recovered at 28°C, the chlorophyll fluorescence QY-max parameters and Fv/Fm-lss parameters of tobacco are recorded by plant phenotype instrument before treatment, 24 h under low temperature and 24 h after recovery, respectively.

### 4. Experiment result:

QY-max represented the theoretical maximum photosynthetic capacity of plants, and the lower the reduction rate, the better the anti-low temperature effect of plants. Fv/Fm-lss represents the maximum photoquantum yield of PSII, which is similar to QY-max, and the lower the reduction rate, the better the plant resistance to low temperature. According to the table below, the fluorescence values of QY-max and Fv/Fm-lss in each treatment group decrease significantly after 24 h of low temperature treatment, however, the fluorescence values of QY-max and Fv/Fm-lss decrease less in the treatment groups of pollen polysaccharide in the concentration range of 0.03~30 ppm, which indicate that the growth state of the plants is better than the pure water control, and the resistance to low temperature is stronger.

After 24 h of low temperature treatment, the optimal anti-low temperature concentration of the active moiety Fr, active moiety FR-1 and active moiety FR1-5 of pollen polysaccharide is 3 ppm. However, the anti-low temperature effect of active moiety FR1-5 is better than active moiety Fr and active moiety FR-1. The best anti-low temperature concentration of pollen polysaccharide 1 and 2 is 0.3ppm, and the best anti-low temperature concentration of pollen polysaccharide 3 and 4 is 0.03ppm.

**Table 16 Determined Results of Low Temperature Treatment for 24 h**

| Sample Name | Agent Concentration (ppm) | Change rate of QY-max (%) | Change rate of Fv/Fm-lss (%) |
|---|---|---|---|
| Active moiety Fr of pollen polysaccharide | 0.03 | -35.51 | -41.13 |
| | 0.3 | -32.20 | -35.02 |
| | 3 | -25.39 | -32.31 |
| | 30 | -29.09 | -38.85 |
| Active moiety Fr of pollen polysaccharide-1 | 0.03 | -34.25 | -39.90 |
| | 0.3 | -29.88 | -33.19 |
| | 3 | -20.03 | -26.22 |
| | 30 | -32.76 | -35.51 |
| Active moiety Fr of pollen polysaccharide-1-5 | 0.03 | -23.97 | -27.70 |
| | 0.3 | -21.18 | -25.26 |
| | 3 | -19.02 | -20.19 |
| | 30 | -28.79 | -24.28 |
| Pollen polysaccharide 1 | 0.03 | -22.01 | -32.30 |
| | 0.3 | -17.79 | -20.13 |
| | 3 | -21.19 | -25.55 |
| | 30 | -26.54 | -30.18 |
| Pollen polysaccharide 2 | 0.03 | -21.10 | -25.52 |
| | 0.3 | -18.87 | -20.04 |
| | 3 | -20.75 | -26.55 |
| | 30 | -31.19 | -31.27 |
| Pollen polysaccharide 3 | 0.03 | -18.87 | -20.04 |
| | 0.03 | -21.10 | -25.52 |
| | 3 | -20.75 | -26.55 |
| | 30 | -31.19 | -31.27 |
| Pollen polysaccharide 4 | 0.03 | -15.54 | -17.28 |
| | 0.3 | -17.27 | -20.01 |
| | 3 | -22.25 | -24.33 |
| | 30 | -24.89 | -25.32 |
| Pure water | --- | -37.71 | -43.91 |

After the recovery at normal temperature for 24 h, the fluorescence values of QY-max and Fv/Fm-lss in each treatment group begin to rise, as shown in the table below, which indicate that the growth state of the damaged plants recovers under low temperature, active moiety Fr, active moiety FR-1 and active moiety Fr1-5 of pollen polysaccharide 1 at 3 ppm and pollen polysaccharide 1 at 0.3 ppm could significantly promote the recovery of plant growth state, pollen polysaccharide 2 at 0.03 ppm could significantly promote the recovery of plant growth state, pollen polysaccharide 3 and 4 at 0.03 ppm could significantly promote the recovery of plant growth state.

**Table 17 Determined Results of Normal Temperature Recovery for 24 h**

| Sample Name | Agent Concentration (ppm) | Change rate of QY-max (%) | Change rate of Fv/Fm-lss (%) |
|---|---|---|---|
| Active moiety Fr of pollen polysaccharide | 0.03 | -25.92 | -20.91 |
| | 0.3 | -24.33 | -16.74 |
| | 3 | -20.01 | -15.25 |
| | 30 | -22.24 | -18.82 |
| Active moiety Fr of pollen polysaccharide-1 | 0.03 | -23.31 | -19.82 |
| | 0.3 | -22.22 | -17.55 |
| | 3 | -17.89 | -13.30 |
| | 30 | -22.95 | -19.90 |
| Active moiety Fr of pollen polysaccharide-1-5 | 0.03 | -22.18 | -17.76 |
| | 0.3 | -19.16 | -12.19 |
| | 3 | -12.24 | -10.90 |
| | 30 | -20.10 | -15.34 |
| Pollen polysaccharide 1 | 0.03 | -18.89 | -17.71 |
| | 0.3 | -11.22 | -9.89 |
| | 3 | -13.39 | -14.26 |
| | 30 | -19.91 | -17.09 |
| Pollen polysaccharide 2 | 0.03 | -17.75 | -13.30 |
| | 0.3 | -12.21 | -11.24 |
| | 3 | -19.90 | -17.70 |
| | 30 | -21.17 | -19.14 |
| Pollen polysaccharide 3 | 0.03 | -8.05 | -8.03 |
| | 0.3 | -12.03 | -11.27 |
| | 3 | -16.61 | -13.90 |
| | 30 | -18.12 | -18.16 |
| Pollen polysaccharide 4 | 0.03 | -9.21 | -7.09 |
| | 0.3 | -14.49 | -12.28 |
| | 3 | -15.17 | -14.87 |
| | 30 | -18.88 | -17.25 |
| Pure water | --- | -26.61 | -21.22 |

### Embodiment 10: High temperature resistance

### 1. Experiment Sample:

Active moiety Fr of pollen polysaccharide, active moiety Fr-1 of pollen polysaccharide, active moiety Fr 1-5 of pollen polysaccharide, pollen polysaccharide 1-4, all the above samples are prepared with pure water into mother liquor with polysaccharide concentration of 10 mg/ml and diluted with water according to the experiment design.

### 2. Experiment Design: Refer to Table 13.

### 3. Experiment method:

Tobacco seedlings (3 leaves) with the same growth level are selected, after the agent is prepared according to the above table, the tobacco seedling leaves are sprayed evenly, each treatment is repeated for 6 times, with 1 plant per replicate. It is appropriate that the liquid do not drop to prevent the agent from entering the soil and affecting the experiment results, the seedlings are treated with high temperature (40°C) for 48 h after survival for 1 day, the chlorophyll fluorescence QY-max parameters and Fv/Fm-lss parameters of tobacco are recorded by plant phenotype instrument before treatment, 24 h under low temperature and 24 h after recovery, respectively. The content of malondialdehyde is determined by sampling after 48 h of high temperature treatment.

### 4. Experiment result:

QY-max represents the theoretical maximum photosynthetic capacity of plants, and the lower the reduction rate, the better the anti-low temperature effect of plants. Fv/Fm-lss represents the maximum photoquantum yield of PSII, which is similar to QY-max, and the lower the reduction rate, the better the plant resistance to low temperature. The non-photochemical quenching coefficient NPQ-lss reflects the ability of plants to dissipate excess light energy into heat, and the photoprotection ability of plants, when plants are stressed, the light energy absorbed by plants is no longer used for photosynthesis, but directly converted into heat and dissipated avoid plant damage, at this time, plant NPQ-lss would increase, therefore, the lower the value of NPQ-lss under high temperature stress, the less the damage to the plant, the better the effect of high temperature resistance.

According to the table below, the fluorescence values of QY-max and Fv/Fm-lss in each treatment group decrease significantly after 48 h of high temperature treatment, however, the fluorescence values of QY-max and Fv/Fm-lss decrease less and the fluorescence values of NPQ-1ss increase less in the treatment groups of pollen polysaccharide in the concentration range of 0.03-30 ppm, which indicate that the growth state of the plants is better than the pure water control, and the resistance to high temperature is stronger. After 48 h of high temperature treatment, the optimal anti-high temperature concentration of the active moiety Fr, active moiety FR-1 and active moiety FR1-5 of pollen polysaccharide is 3 ppm. However, the anti-high temperature effect of active moiety FR1-5 is better than active moiety Fr and active moiety FR-1. The best anti-high temperature concentration of pollen polysaccharide 1 and 2 is 0.3 ppm, and the best anti-high temperature concentration of pollen polysaccharide 3 and 4 is 0.03 ppm.

**Table 18 Results of Fluorescence Parameter in Different Treatment Groups**

| Sample Name | Agent Concentration (ppm) | Change rate of QY-max (%) | Change rate of Fv/Fm-lss (%) | Change rate of NPQ-lss (%) |
|---|---|---|---|---|
| Active moiety Fr of pollen polysaccharide | 0.03 | -28.11 | -29.10 | 53.06 |
| | 0.3 | -21.36 | -25.18 | 42.15 |
| | 3 | -18.29 | -24.37 | 38.02 |
| | 30 | -26.02 | -27.45 | 49.91 |
| Active moiety Fr of pollen polysaccharide-1 | 0.03 | -27.71 | -30.20 | 49.05 |
| | 0.3 | -21.18 | -27.71 | 38.27 |
| | 3 | -15.45 | -22.33 | 35.49 |
| | 30 | -25.18 | -25.66 | 48.47 |
| Active moiety Fr of pollen polysaccharide-1-5 | 0.03 | -26.32 | -30.13 | 48.82 |
| | 0.3 | -19.20 | -24.36 | 34.56 |
| | 3 | -13.03 | -19.23 | 31.25 |
| | 30 | -25.45 | -29.15 | 46.21 |
| Pollen polysaccharide 1 | 0.03 | -19.19 | -30.19 | 45.08 |
| | 0.3 | -9.10 | -15.00 | 26.87 |
| | 3 | -15.45 | -19.24 | 34.28 |
| | 30 | -22.31 | -31.27 | 44.82 |
| Pollen polysaccharide 2 | 0.03 | -25.67 | -31.23 | 48.93 |
| | 0.3 | -15.84 | -19.06 | 33.45 |
| | 3 | -17.74 | -25.70 | 37.88 |
| | 30 | -24.03 | -32.01 | 48.49 |
| Pollen polysaccharide 3 | 0.03 | -9.12 | -13.28 | 29.26 |
| | 0.3 | -14.33 | -18.82 | 31.10 |
| | 3 | -16.21 | -26.38 | 35.23 |
| | 30 | -27.53 | -32.20 | 49.11 |
| Pollen polysaccharide 4 | 0.03 | -8.15 | -10.23 | 27.65 |
| | 0.3 | -13.09 | -16.59 | 30.02 |
| | 3 | -15.21 | -24.33 | 32.19 |
| | 30 | -26.87 | -31.19 | 48.69 |
| Pure water | -- | -28.88 | -32.91 | 55.37 |

## Claims

1. Pollen polysaccharide, whose main repeating unit structure is one of the following:
Pollen polysaccharide 1: 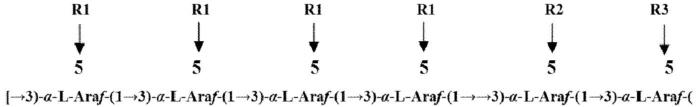 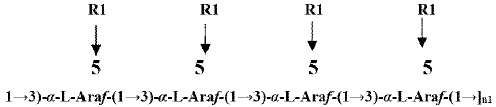 Where,
**R1** 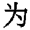 **T-α-L-Ara*f*-(1→5)-α-L-Ara*f*-(1→**
**R1 is T-α-L-Ara*f*-(1→5)-α-L-Ara*f*-(1→**
**R2** 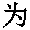 **T-β-D-Gal*p*-(1→6)-β-D-Gal*p*-(1→**
**R2 is T-β-D-Gal*p*-(1→6)-β-D-Gal*p*-(1→**
**R3** 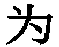 **T-α-D-Glc*p*-(1→4)-α-D-Glc*p*-(1→,**
**R3 is T-α-D-Glc*p*-(1→4)-α-D-Glc*p*-(1→,**
The average molecular weight of pollen polysaccharide 1 is 20 ~ 30KDa;
Pollen polysaccharide 2: 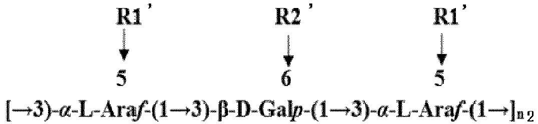 Where,
R1' 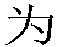 T-α-L-Ara*f*-(1→5)-α-L-Ara*f*-(1→
R1' is T-α-L-Ara*f-*(1→5)-α-L-Ara*f*-(1→
R2' 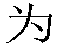 T-β-D-Gal*p*-(1→6)-β-D-Gal*p*-(1→,
R2' is T-β-D-Gal*p*-(1→6)-β-D-Gal*p*-(1→,
The average molecular weight of pollen polysaccharide 2 is 5 ~ 15KDa;
Pollen polysaccharide 3:
| | |
|---|---|
| Main Chain | 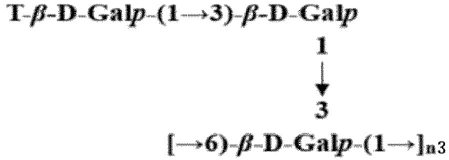 |
| Branch Chain | 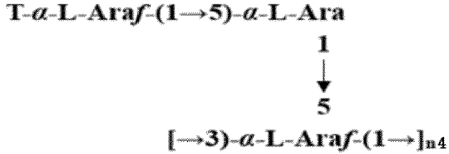 |
The average molecular weight of pollen polysaccharide 3 is 60 ~ 70KDa;
Pollen polysaccharide 4:
| | |
|---|---|
| Main Chain | 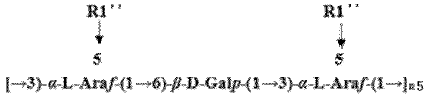 |
| Branch Chain | **→3)-*β*-D-Gal*p*-(1→6)-*β*-D-Gal*p*-(1→** |
R1" 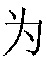 T-α-L-Ara*f-*(1→5)-α-L-Ara*f-*(1→,
Among them, R1" s T-α-L-Araf(1 → 5)-α-L-Araf-(1 →), and the average molecular weight of pollen polysaccharide 4 is 5 ~ 15KDa.

2. According to Claim 1, pollen polysaccharide **characterized in that** the pollen polysaccharide 1 also contains the following monosaccharide residues: fucose, xylose and mannose; Pollen polysaccharide 2 also contains the following monosaccharide residues: fucose, glucose, xylose and mannose; Pollen polysaccharide 3 also contains the following monosaccharide residues: fucose, rhamnose, glucose, xylose, mannose, galacturonic acid and glucuronic acid; Pollen polysaccharide 4 also contains the following monosaccharide residues: fucose, glucose, xylose, mannose and galacturonic acid.

3. According to Claim 1, pollen polysaccharide **characterized in that** the infrared spectrum of the pollen polysaccharide 1 comprises at least one or more of the following absorption peaks: 3,342 cm⁻¹, 1,641 cm⁻¹, 1,536 cm⁻¹, 1,440 cm⁻¹, 1,147 cm⁻¹, 1,103 cm⁻¹, 1,076 cm⁻¹, 1,311 cm⁻¹, 1,241 cm⁻¹, 1,027 cm⁻¹, 894 cm⁻¹, 873 cm⁻¹; the infrared spectrum of the pollen polysaccharide 2 comprises at least one or more of the following absorption peaks: 3,288 m⁻¹, 2,931 cm⁻¹, 2,871 cm⁻¹, 1,641 m⁻¹, 1,548 cm⁻¹, 1,440 cm⁻¹, 1,402 cm⁻¹, 1,309 cm⁻¹, 1,243 cm⁻¹, 1,081 cm⁻¹, 896 cm⁻¹; the infrared spectrum of the pollen polysaccharide 3 comprises at least one or more of the following absorption peaks: 3,426 cm⁻¹, 2,939 cm⁻¹, 1,734 cm⁻¹, 1,619 cm⁻¹, 1,423 cm⁻¹, 1,145 cm⁻¹, 1,091 cm⁻¹, 895cm⁻¹ the infrared spectrum of the pollen polysaccharide 4 comprises at least one or more of the following absorption peaks: 3,322 m⁻¹, 2,931 cm⁻¹, 2,875 cm⁻¹, 1,641 m⁻¹, 1,544 cm⁻¹, 1,407 cm⁻¹, 1,309 cm⁻¹, 1,241 cm⁻¹, 1,076 cm⁻¹, 1,047 cm⁻¹, 894 cm⁻¹.

4. A method for separating pollen polysaccharide according to Claim 1, **characterized in that** the method for separating pollen polysaccharide 1 comprises the following contents:
(1) Rape pollen polysaccharide (RPP) extract is purified by macroporous adsorption resin column and eluted with water to obtain the pollen polysaccharide active moiety Fr-1;
(2) The pollen polysaccharide active moiety Fr-1 is passed through the anion exchange chromatography column and eluted with water to obtain pollen polysaccharide active moiety Fr-1-1;
(3) The pollen polysaccharide active moiety Fr-1-1 is further purified by SephadexG chromatography column, in which ammonium bicarbonate aqueous solution is used as eluent to obtain pollen polysaccharide 1;
The separation method of pollen polysaccharide 2 includes the following contents:
(1) RPP extract is purified by macroporous adsorption resin column and eluted with water to obtain the preliminarily purified pollen polysaccharide active moiety Fr-1;
(2) The pollen polysaccharide active moiety Fr-1 is passed through an anion exchange chromatography column with a gradient elution of 0 - 0.025 mol/L NaCl solution, and the 0.025 mol/L NaCl eluent is collected to yield the pollen polysaccharide active moiety Fr-1-2;
(3) The pollen polysacchafride active moiety Fr-1-2 is further purified by SephadexG chromatography column, in which ammonium bicarbonate aqueous solution is used as eluent to obtain pollen polysaccharide 2;
The separation method of pollen polysaccharide 3 includes the following contents:
(1) RPP extract is purified by macroporous adsorption resin column and eluted with water to obtain the preliminarily purified pollen polysaccharide active moiety Fr-1;
(2) The pollen polysaccharide active moiety Fr-1 is passed through an anion exchange chromatography column and subjected to gradient elution with 0 - 0.05 mol/L NaCl solution, and the pollen polysaccharide in 0.05 mol/L NaCl solution is collected to obtain pollen polysaccharide active moiety Fr-1-3;
(3) The pollen polysaccharide active moiety Fr-1-3 is further purified by SephadexG chromatography column, in which ammonium bicarbonate aqueous solution is used as eluent to obtain pollen polysaccharide 3;
The separation method of pollen polysaccharide 4 includes the following contents:
(1) RPP extract is purified by macroporous adsorption resin column and eluted with water to obtain the preliminarily purified pollen polysaccharide active moiety Fr-1;
(2) The pollen polysaccharide active moiety Fr-1 is passed through an anion exchange chromatography column and subjected to gradient elution with 0 - 0.25 mol/L NaCl solution, and the pollen polysaccharide in 0.25 mol/L NaCl solution is collected to obtain pollen polysaccharide active moiety Fr-1-4;
(3) The pollen polysaccharide active moiety Fr-1-4 is further purified by SephadexG chromatography column, in which ammonium bicarbonate aqueous solution is used as eluent to obtain pollen polysaccharide 4.

5. The separation method described in Claim 5 is **characterized in that** the RPP extract referred to in step (1) is the crude pollen polysaccharide obtained from oilseed rape pollen by water extraction and ethanol precipitation method.

6. The separation method described in Claim 4 is **characterized in that** the macroporous resin column used in step (1) is selected from one of DB-101 macroporous resin column, S-8 macroporous resin column, AB-8 macroporous resin column and HP-20 macroporous resin column; The ion exchange chromatography column used in the step (2) is selected from the DEAE cellulose chromatography column; The SephadexG chromatography column used in the step (3) is selected from acryl SephadexG chromatography column; And further selected from the acryl SephadexG S-400 HR chromatography column.

7. The separation method described in Claim 4 is **characterized in that** in step (3), the concentration of ammonium bicarbonate aqueous solution is 0.1 - 0.3 mol/L.

8. A RPP active moiety Fr-1, **characterized in that** the RPP extract is purified by macroporous adsorption resin and eluted with water to obtain the pollen polysaccharide active moiety Fr-1, which comprises pollen polysaccharide 1, pollen polysaccharide 2, pollen polysaccharide 3 and pollen polysaccharide 4 according to Claim 1.

9. A RPP active moiety Fr-1-5, **characterized in that** it is obtained by: the RPP extract is purified by macroporous adsorption resin, eluted with water, and then passed through an ion exchange chromatography column to obtain all eluted sites from 0 - 0.25 mol/L sodium chloride solution and obtain the active moiety Fr-1-5, which contains pollen polysaccharide 1, pollen polysaccharide 2, pollen polysaccharide 3 and pollen polysaccharide 4 according to Claim 1.

10. A pollen polysaccharide active moiety Fr, **characterized in that** the active moiety Fr is obtained from rape pollen by water extraction and ethanol precipitation method, and comprises pollen polysaccharide 1, pollen polysaccharide 2, pollen polysaccharide 3 and pollen polysaccharide 4 according to Claim 1.

11. The pollen polysaccharide described in any one of Claims 1-3, or the use of the pollen polysaccharide active moiety according to any one of Claims 8-10 in the preparation of plant growth-promoting and stress-resistant products;
Further, the plant stress resistance comprises resistances to cold, drought, saline-alkali and high temperature;
Further, when in use, the product containing pollen polysaccharide or pollen polysaccharide active moiety is applied to the surface of plant leaves or plant roots;
Further, the plants include tobacco, pakchoi, Baby Chinese cabbage, asparagus lettuce, romaine lettuce, Brassica chinensis L., wheat, pepper, tomato, citrus, kiwi fruit, cherry, pear, and apple.

12. An agricultural product, **characterized in that** the active ingredient of the product comprises the pollen polysaccharide according to any one of Claims 1-3 or the pollen polysaccharide active moiety according to any one of Claims 8-10.

13. The agricultural product described in Claim 12 is **characterized in that** the product further comprises an excipient, which is one or more of a dispersing agent, a wetting agent, a plastering agent, an emulsifying agent, a stabilizer, a solvent, and an entrapment agent.

14. The agricultural product described in Claim 12 is **characterized in that** the dosage form of the product is oil emulsion, suspending agent, wettable powder, powder, granule, aqueous solutions, mother liquor or mother powder.
